# EUROPEAN PATENT APPLICATION

(11) **EP 3 974 464 A1**
(43) Date of publication of application: **30.03.2022**
(21) Application number: 20808924.3
(22) Date of filing: 18.05.2020
(51) Int. Cl.: C08G 77/26, C08G 77/38, D06M 15/643

(54) **AMINOALKYL GROUP-CONTAINING ORGANOPOLYSILOXANE AND FIBER TREATMENT AGENT**

(30) Priority: 22.05.2019 JP 2019096143
(71) Applicant: Shin-Etsu Chemical Co., Ltd., Tokyo 100-0005 (JP)
(72) Inventor: HAMAJIMA, Yuta, Annaka-shi, Gunma 379-0224 (JP)
(74) Representative: Mewburn Ellis LLP
(86) International application number: PCT/JP2020/019619
(87) International publication number: WO 2020/235522

(57) **Abstract**

An organopolysiloxane having a group represented by general formula (1) on a molecular terminal and/or a side chain has excellent heat resistance, is unlikely to become discolored even after heating, and is capable of imparting excellent flexibility to a fiber surface after treatment. 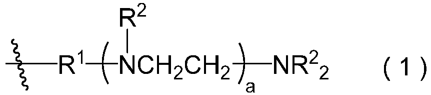 (In general formula (1), R¹ is a divalent hydrocarbon group having 1-8 carbon atoms, a is an integer of 0-4, R² are each independently a hydrogen atom or a monovalent organic group having 7-20 carbon atoms and including at least one aromatic group, and at least 30 mol% of the groups represented by R² that are bonded to nitrogen atoms within the organopolysiloxane are monovalent organic groups having 7-20 carbon atoms and including at least one aromatic group. The wavy line represents a bonding site.)

## Description

### TECHNICAL FIELD

The present invention relates to an organopolysiloxane. More particularly, the invention relates to an aminoalkyl group-containing organopolysiloxane which has excellent heat resistance and undergoes little yellowing even in high-temperature treatment. The invention relates also to a textile treatment containing such an organopolysiloxane.

### BACKGROUND ART

A variety of organopolysiloxanes, such as dimethylpolysiloxanes, epoxy group-containing polysiloxanes and aminoalkyl group-containing polysiloxanes, are widely used as treatments for imparting properties such as softness and smoothness to various types of textile fibers and textile products. Of these, frequent use is made of aminoalkyl group-containing organopolysiloxanes, which have the ability to impart an especially good softness to a variety of textile fibers and textile products. In particular, textile treatments in which the base compound is an organopolysiloxane having an aminoalkyl group such as -C₃H₆NH₂ or -C₃H₆NHC₂H₄NH₂ (Patent Documents 1 to 6: JP-B S48-1480, JP-B S54-43614, JP-B S57-43673, JP-A S60-185879, JP-A S60-185880, JP-A S64-61576) impart excellent softness and are thus widely used.

However, fibers treated using a -C₃H₆NH₂- or -C₃H₆NHC₂H₄NH₂-containing organopolysiloxane have certain major drawbacks, these being amino group deterioration due to heat treatment, drying or exposure to heat or UV light over time, particularly yellowing of the color tone in white to lightly colored textile fibers and textile products, and decreased softness.

To prevent such yellowing, methods for reacting an aminoalkyl group-containing organopolysiloxane with an organic acid anhydride or chloride (Patent Document 7: JP-A S57-101076), epoxy compound (Patent Document 8: JP-A S59-179884), higher fatty acid (Patent Document 9: JP-A H01-306683) or carbonate (Patent Document 10: JP-A H02-47371) and thereby modifying the aminoalkyl groups have been described.

However, although such modified aminoalkyl group-containing organopolysiloxanes do have an observable improvement in the yellowing-preventing effect as compared with unmodified aminoalkyl group-containing organopolysiloxanes, this effect remains inadequate. Moreover, from the standpoint of imparting softness and smoothness to textile fibers, such modified aminoalkyl group-containing organopolysiloxanes are instead inferior to unmodified aminoalkyl group-containing organopolysiloxanes. Also, depending on the substituent which modifies the aminoalkyl groups, the substituent itself may yellow due to heat, resulting in discoloration of the polysiloxane.

### PRIOR ART DOCUMENTS

### PATENT DOCUMENTS

Patent Document 1: JP-B S48-1480
Patent Document 2: JP-B S54-43614
Patent Document 3: JP-B S57-43673
Patent Document 4: JP-A S60-185879
Patent Document 5: JP-A S60-185880
Patent Document 6: JP-A S64-61576
Patent Document 7: JP-A S57-101076
Patent Document 8: JP-A S59-179884
Patent Document 9: JP-A H01-306683
Patent Document 10: JP-A H02-47371

### SUMMARY OF INVENTION

### TECHNICAL PROBLEM

It is therefore an object of the present invention to provide an organopolysiloxane which has excellent heat resistance, resists discoloration even after heating and is able to impart an excellent softness to textile fiber surfaces following treatment. Another object is to provide a textile treatment containing such an organopolysiloxane.

### SOLUTION TO PROBLEM

The inventor has conducted intensive investigations in order to achieve these objects. As a result, he has discovered that an organopolysiloxane having, on a molecular terminal and/or a side chain, a group of general formula (1) below 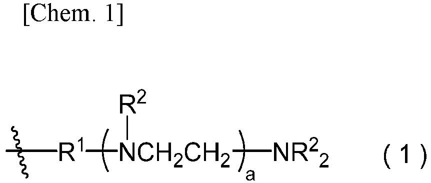 (wherein R¹ is a divalent hydrocarbon group of 1 to 8 carbon atoms, the subscript 'a' is an integer from 0 to 4, each R² is independently a hydrogen atom or a monovalent organic group of 7 to 20 carbon atoms containing at least one aromatic group, at least 30 mol% of the R² groups bonded to nitrogen atoms on the organopolysiloxane being monovalent organic groups of 7 to 20 carbon atoms containing at least one aromatic group, and the wavy line represents a bonding site) is able to impart an excellent softness to textile fiber surfaces following treatment, has an excellent heat resistance and resists discoloration even after heating.

Accordingly, the present invention provides the following organopolysiloxane and the following textile treatment.
[1] An organopolysiloxane having, on a molecular terminal and/or a side chain, a group of general formula (1) below 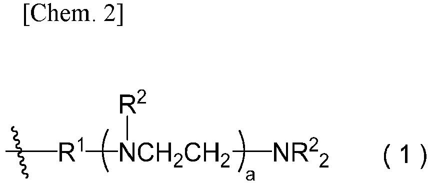 (wherein R¹ is a divalent hydrocarbon group of 1 to 8 carbon atoms, the subscript 'a' is an integer from 0 to 4, each R² is independently a hydrogen atom or a monovalent organic group of 7 to 20 carbon atoms containing at least one aromatic group, at least 30 mol% of the R² groups bonded to nitrogen atoms on the organopolysiloxane being monovalent organic groups of 7 to 20 carbon atoms containing at least one aromatic group, and the wavy line represents a bonding site).
[2] The organopolysiloxane of [1], wherein the monovalent organic groups R² of 7 to 20 carbon atoms containing at least one aromatic group in formula (1) are groups of general formula (2) or (3) below 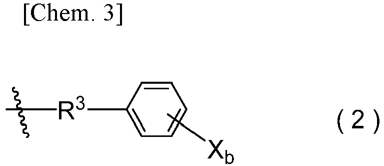 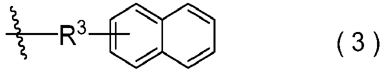 (wherein R³ is a divalent organic group of 1 to 10 carbon atoms, each X is independently a monovalent hydrocarbon group of 1 to 8 carbon atoms, a hydroxyl group or a halogen atom, the subscript 'b' is an integer from 0 to 5, and the wavy line represents a bonding site).
[3] The organopolysiloxane of [1], wherein the monovalent organic groups R² of 7 to 20 carbon atoms containing at least one aromatic group in formula (1) are of one or more types selected from groups of the following general formulas 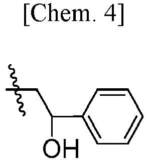 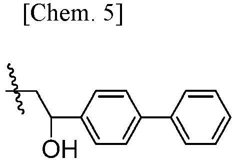 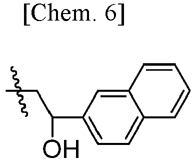 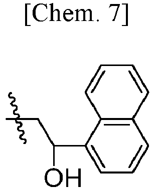 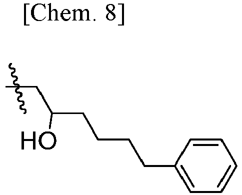 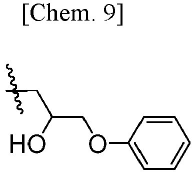 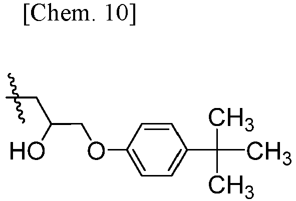 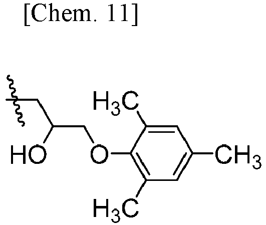 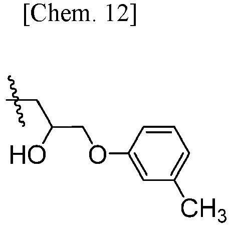 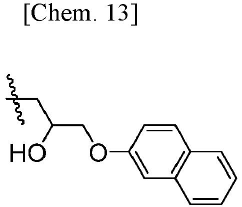 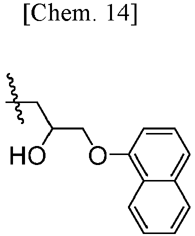 (wherein the wavy line represents a bonding site).
[4] The organopolysiloxane of any of [1] to [3], wherein at least 40 mol% of the R² groups bonded to nitrogen atoms on the organopolysiloxane are monovalent organic groups of 7 to 20 carbon atoms containing at least one aromatic group.
[5] The organopolysiloxane of any of [1] to [4], wherein the molecule is free of polyoxyalkylene groups.
[6] A textile treatment containing the organopolysiloxane of any one of [1] to [5].

### ADVANTAGEOUS EFFECTS OF INVENTION

The inventive organopolysiloxane having, on a molecular terminal and/or side chain, a group of general formula (1) above is able to impart textile fibers with an excellent softness. Also, the organopolysiloxane of the invention has an excellent heat resistance and resists discoloration and changes in appearance even after heating.

### DESCRIPTION OF EMBODIMENTS

The invention is described more fully below.

### [Organopolysiloxane]

This invention is directed at an organopolysiloxane having, on a molecular terminal and/or a side chain, a group of general formula (1) below 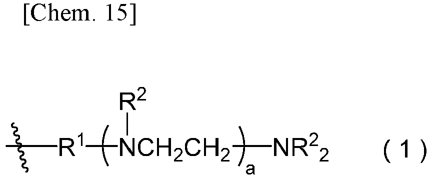 (wherein R¹ is a divalent hydrocarbon group of 1 to 8 carbon atoms, the subscript 'a' is an integer from 0 to 4, each R² is independently a hydrogen atom or a monovalent organic group of 7 to 20 carbon atoms containing at least one aromatic group, at least 30 mol% of the R² groups bonded to nitrogen atoms on the organopolysiloxane being monovalent organic groups of 7 to 20 carbon atoms containing at least one aromatic group, and the wavy line represents a bonding site).

The organopolysiloxane has a structure that may be linear, branched or cyclic, although the structure is preferably linear. In this organopolysiloxane, the groups represented by formula (1) are bonded to silicon atoms on the polysiloxane skeleton and may be present at either the ends of the molecule or at intermediate positions on the molecule. The organopolysiloxane has at least one group, and preferably from 2 to 50 groups, of formula (1) on the molecule.

In formula (1), R¹ is a divalent hydrocarbon group of 1 to 8 carbon atoms. This divalent hydrocarbon group is preferably an alkylene group such as a methylene, ethylene, propylene or butylene group. Of these, a propylene group is especially preferred.

The subscript 'a' is an integer from 0 to 4, and preferably an integer from 0 to 2.

R² represents a hydrogen atom or a monovalent organic group of 7 to 20 carbon atoms which includes at least one aromatic group. The monovalent organic groups R² of 7 to 20 carbon atoms which include at least one aromatic group are exemplified by groups of general formulas (2) and (3) below 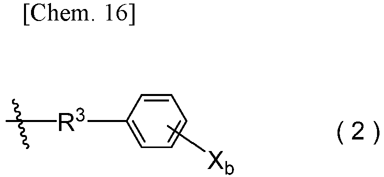 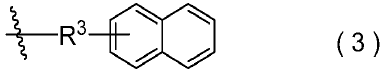 (wherein R³ is a divalent organic group of 1 to 10 carbon atoms, each X is independently a monovalent hydrocarbon group of 1 to 8 carbon atoms, a hydroxyl group or a halogen atom, the subscript 'b' is an integer from 0 to 5, and the wavy line represents a bonding site).

In above formulas (2) and (3), R³ is a divalent organic group of 1 to 10 carbon atoms, and preferably 2 to 6 carbon atoms. Specific examples include those shown below 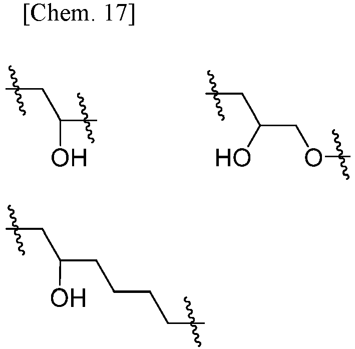 (wherein the wavy lines indicate bonding sites).

In formula (2), each X is independently a monovalent hydrocarbon group of 1 to 8 carbon atoms, a hydroxyl group or a halogen atom. Specific examples of X include monovalent hydrocarbon groups of 1 to 8 carbon atoms, preferably 1 to 4 carbon atoms, including alkyl groups such as methyl, ethyl, propyl, butyl, pentyl, hexyl, heptyl and octyl groups, and aryl groups such as the phenyl group; the hydroxyl group; and halogen atoms such as fluorine, chlorine, bromine and iodine.

The subscript 'b' is an integer from 0 to 5, and preferably an integer from 0 to 3.

Specific examples of the groups represented by formulas (2) and (3) include the following: 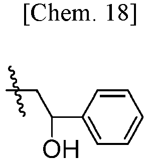 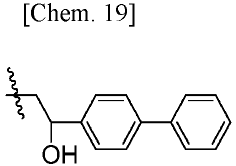 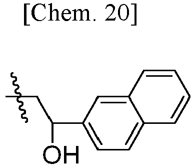 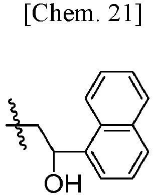 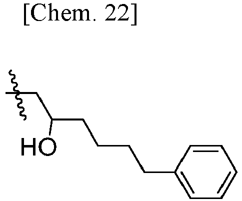 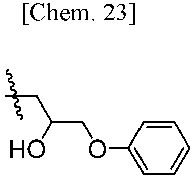 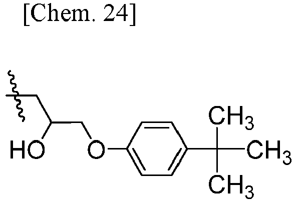 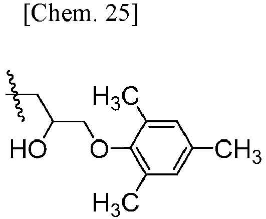 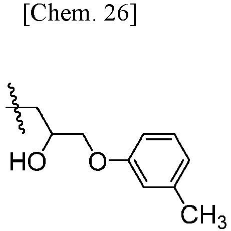 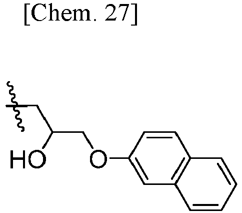 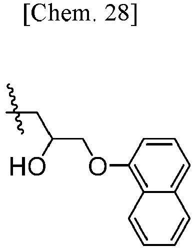 (wherein the wavy line indicates a bonding site).

The group represented by formula (1) is exemplified by the following: 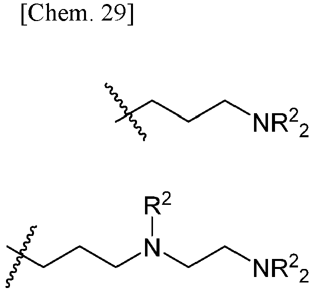 (wherein R² is as defined above, and the wavy line represents a bonding site).

In the organopolysiloxane of the invention, of the groups represented by R² which bond to nitrogen atoms, at least 30 mol%, preferably from 30 to 95 mol%, more preferably from 40 to 95 mol%, and even more preferably from 50 to 95 mol%, are monovalent organic groups of 7 to 20 carbon atoms which contain at least one aromatic group. Therefore, of the R² groups in the organopolysiloxane having groups of formula (1), from 0 to 70 mol%, preferably from 5 to 70 mol%, more preferably from 5 to 60 mol%, and even more preferably from 5 to 50 mol%, are hydrogen atoms.

In the organopolysiloxane of the invention, the groups bonded to silicon atoms on the polysiloxane skeleton, aside from the groups represented by formula (1), are preferably substituted or unsubstituted monovalent hydrocarbon groups of 1 to 20 carbon atoms, preferably 1 to 8 carbon atoms, hydroxyl groups, or alkoxy groups of 1 to 20 carbon atoms, preferably 1 to 8 carbon atoms.

Here, examples of the substituted or unsubstituted monovalent hydrocarbon groups include alkyl groups such as methyl, ethyl, propyl, butyl, pentyl, hexyl, heptyl, octyl, nonyl, decyl, dodecyl, tetradecyl, hexadecyl, octadecyl and eicosyl groups; cycloalkyl groups such as cyclopentyl and cyclohexyl groups; aryl groups such as phenyl and tolyl groups; alkenyl groups such as vinyl and allyl groups; and halogenated alkyl groups and halogenated alkenyl groups in which some or all hydrogen atoms bonded to carbon atoms on these groups are substituted with halogen atoms such as chlorine or fluorine. Examples of the alkoxy groups include methoxy, ethoxy, propoxy and butoxy groups.

In the organopolysiloxane of the invention, it is preferable for groups bonded to silicon atoms on the polysiloxane skeleton, aside from the groups represented by formula (1), to include no nitrogen atoms.

The organopolysiloxane of the invention preferably includes no polyoxyalkylene groups on the molecule. Polyoxyalkylene groups discolor due to oxidative degradation, and so there is a possibility that they may spoil the appearance of the organopolysiloxane. Also, when the organopolysiloxane of the invention is used to treat textile fibers, there is a possibility that discoloration of the polyoxyalkylene groups may lead to yellowing of the fibers.

The organopolysiloxane of the invention has a viscosity at 25°C which is preferably from 20 to 100,000 mPa·s, more preferably from 50 to 50,000 mPa·s, and even more preferably from 100 to 25,000 mPa·s. In this invention, the viscosity is a value measured at 25°C with a BM-type viscometer (such as one available from Tokyo Keiki, Inc.).

The organopolysiloxane of the invention has an amine equivalent weight that is preferably from 200 to 20,000 g/mol, and more preferably from 300 to 10,000 g/mol. As used herein, "amine equivalent weight" refers to the molecular weight of the organopolysiloxane divided by the number of nitrogen atoms thereon. The amine equivalent weight can be measured by neutralization titration using, for example, an automatic titrator from Hiranuma Sangyo Co., Ltd.

The organopolysiloxane of the invention is preferably of at least one type selected from organopolysiloxanes of general formulas (4) and (5) below. 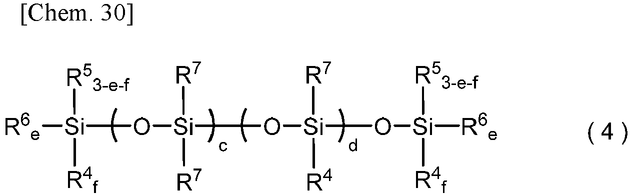 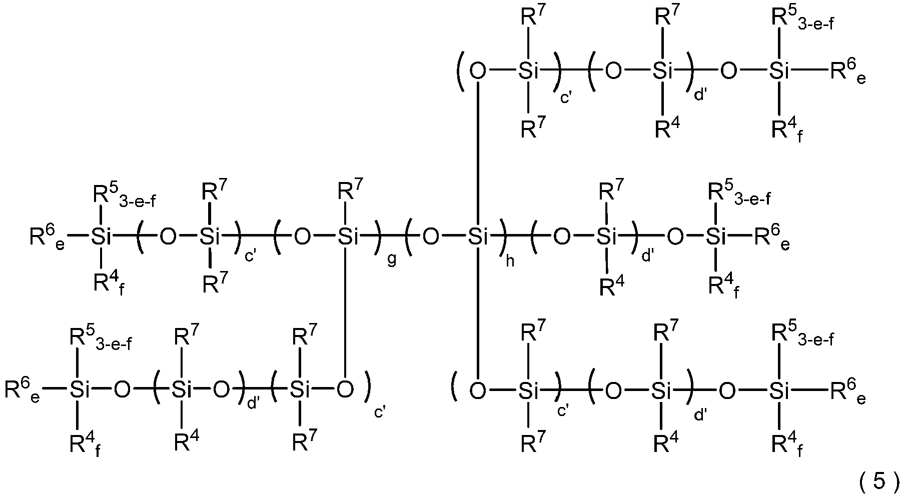 In formulas (4) and (5), each R⁴ is independently a group of formula (1); each R⁵ is independently a substituted or unsubstituted monovalent hydrocarbon group of 1 to 20 carbon atoms, each R⁶ is independently a group of the formula -OY, where Y is a hydrogen atom or R⁵, each R⁷ is independently R⁵ or R⁶, c is an integer from 5 to 2,000, and each c' is independently an integer from 0 to 1,500, the sum of all c' being an integer from 5 to 2,000. Also, d is an integer from 0 to 50, each d' is independently an integer from 0 to 30, the sum of all d' being an integer from 0 to 50, e is independently an integer from 0 to 3 for each bonding silicon atom, f is independently an integer from 0 to 3 for each bonding silicon atom, and e+f is an integer from 0 to 3 at each end of the molecule; with the provisos that the sum of d and the plurality of f is an integer from 1 to 50, and the sum of the plurality of d' and the plurality of f is an integer from 1 to 50. In addition, g is an integer from 1 to 1,000, h is an integer from 0 to 1,000, and g+h is an integer of 1 or more.

In formulas (4) and (5), each R⁴ is independently a group of formula (1).

In formulas (4) and (5), each R⁵ is independently a substituted or unsubstituted monovalent hydrocarbon group of 1 to 20 carbon atoms, and preferably 1 to 8 carbon atoms. Examples of the monovalent hydrocarbon groups include alkyl groups such as methyl, ethyl, propyl, butyl, pentyl, hexyl, heptyl, octyl, nonyl, decyl, dodecyl, tetradecyl, hexadecyl, octadecyl and eicosyl groups; cycloalkyl groups such as cyclopentyl and cyclohexyl groups; aryl groups such as phenyl and tolyl groups; alkenyl groups such as vinyl and allyl groups; and halogenated alkyl groups and halogenated alkenyl groups in which some or all hydrogen atoms bonded to carbon atoms on these groups are substituted with halogen atoms such as chlorine or fluorine. Of these, methyl groups are industrially preferred.

In formulas (4) and (5), each R⁶ is independently a group of the formula -OY, wherein Y is a hydrogen atom or a group selected from the above options for R⁵. Y is preferably a hydrogen atom or an alkyl group such as methyl, ethyl, propyl, butyl, pentyl, hexyl, heptyl or octyl. Of these, R⁶ is preferably a hydroxyl group, methoxy group or ethoxy group.

In formulas (4) and (5), each R⁷ is independently a group selected from the options for R⁵ and R⁶, and is preferably R⁵. In formulas (4) and (5), there are preferably from 0 to 10 occurrences of R⁶ on the molecule.

In formulas (4) and (5), e is independently at each bonding silicon atom an integer of from 0 to 3, and preferably 0 or 1; f is independently at each bonding silicon atom an integer from 0 to 3, and preferably 0 or 1. At each end of the molecule, e+f is an integer from 0 to 3, and is preferably 0, 1 or 2.

Also, in formula (4), c is an integer from 5 to 2,000, and preferably an integer from 10 to 1,000. When c is smaller than the lower limit value here, the softness or smoothness-imparting effect on textile fibers is inadequate. On the other hand, when c is larger than the upper limit value here, the organopolysiloxane has a high viscosity, making it difficult to handle and emulsify, which is undesirable.

The subscript 'd' is an integer from 0 to 50, and preferably an integer from 0 to 30. When d is larger than the upper limit value here, yellowing tends to occur, which is undesirable. Also, the sum of d and the plurality of f (i.e., the number of occurrences of R⁴ in the molecule in formula (4)) is an integer from 1 to 50, and preferably an integer from 1 to 30.

In formula (5), each c' is independently an integer from 0 to 1,500, and preferably an integer from 5 to 980; the sum of all c' is an integer from 5 to 2,000, and preferably an integer from 10 to 1,000. When the sum of all c' is smaller than the lower limit value here, the softness or smoothness-imparting effect on textile fibers is inadequate. On the other hand, when the sum of all c' is larger than the upper limit value here, the organopolysiloxane has a high viscosity, making it difficult to handle and emulsify, which is undesirable.

Each d' is independently an integer from 0 to 30, preferably an integer from 0 to 20, and more preferably an integer from 0 to 10; the sum of all c' is an integer from 0 to 50, and preferably an integer from 0 to 20. When the sum of all d' is larger than the upper limit value here, yellowing tends to occur, which is undesirable. Also, the sum of the plurality of d' and the plurality of f (i.e., the number of occurrences of R⁴ in the molecule in formula (5)) is an integer from 1 to 50, and preferably an integer from 2 to 20.

The subscript 'g' is an integer from 0 to 1,000, and preferably an integer from 0 to 50; the subscript 'h' is an integer from 0 to 1,000, and preferably an integer from 1 to 50; and g+h is an integer of 1 or more, and preferably an integer from 1 to 50.

The organopolysiloxanes of formula (4) above are exemplified by the following:

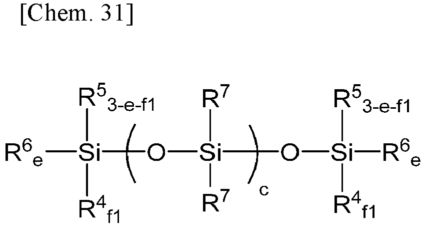

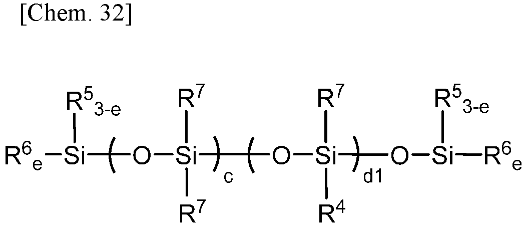

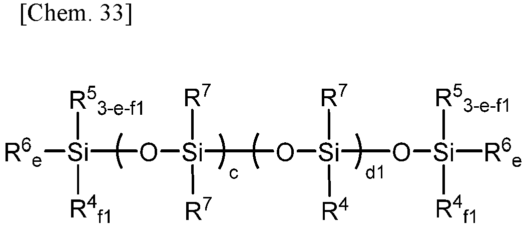

In these formulas, R⁴, R⁵, R⁶, R⁷, c and e are as defined above; d1 is an integer from 1 to 50, and preferably an integer from 2 to 30; each f1 is independently an integer from 0 to 3, with the sum of all f1 being an integer from 1 to 6, and preferably an integer from 2 to 4; and 3+f1 at each end of the molecule is independently an integer from 0 to 3, and preferably 1 or 2. However, in the first of the foregoing formulas, when e+f1 at one end of the molecule is 0, e+f1 at the other end is an integer from 1 to 3.

The organopolysiloxanes of formula (4) are more preferably exemplified by: 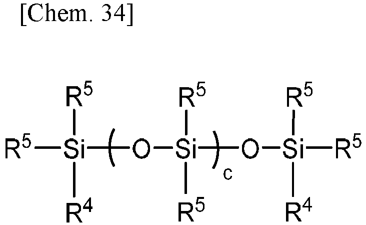 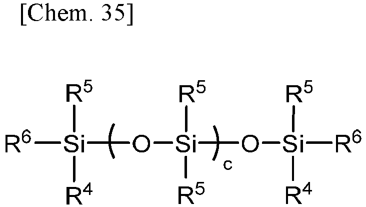 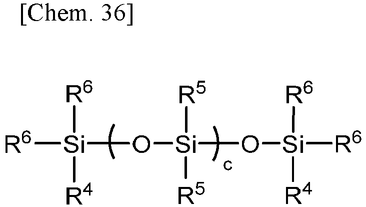 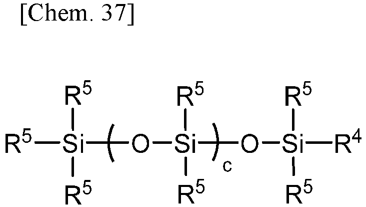 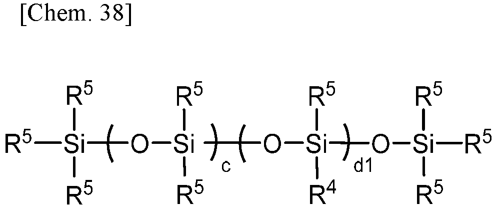 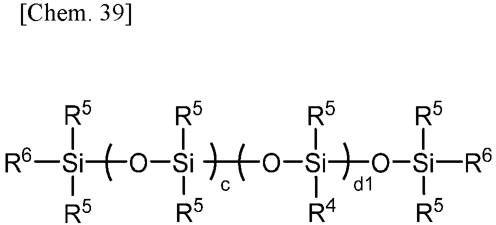 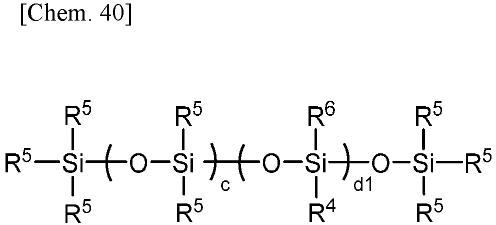 (wherein R⁴, R⁵, R⁶, c and d1 are as defined above).

The organopolysiloxanes of formula (5) above are exemplified by the following:

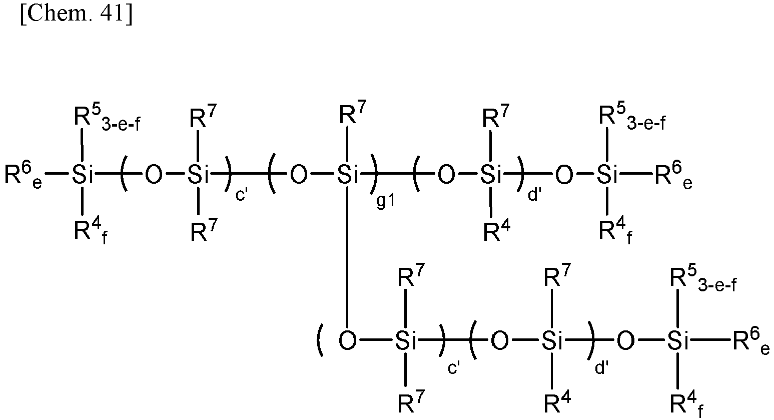

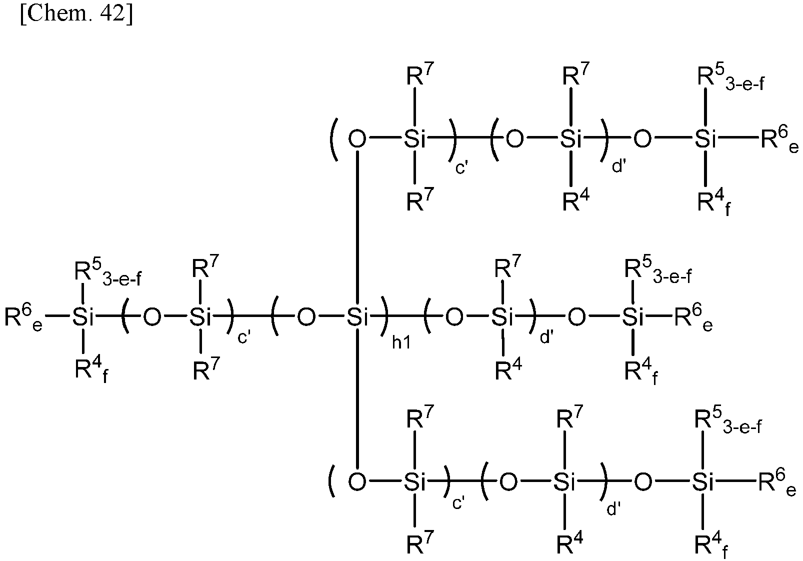

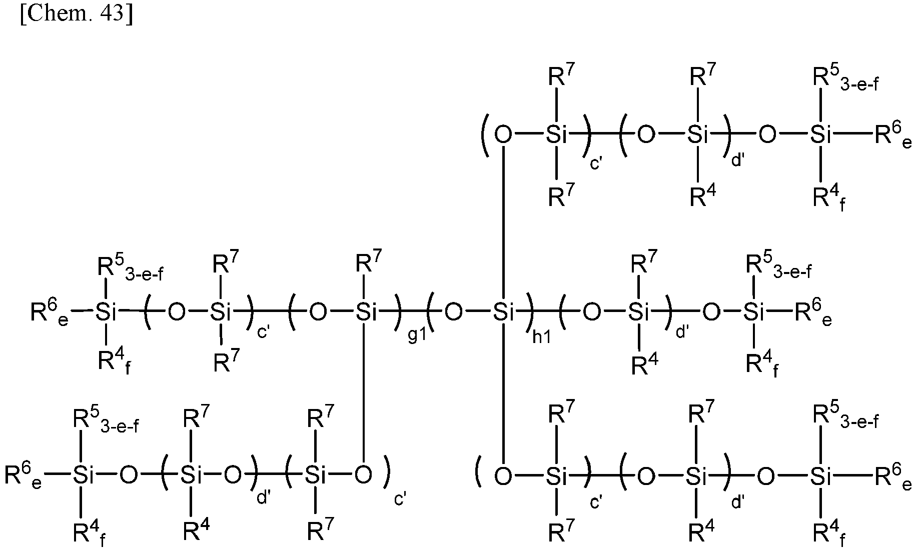

In these formulas, R⁴, R⁵, R⁶, R⁷, c', d', e, f, the sum of all c', the sum of all d', e+f at each end of the molecule, and the sum of the plurality of d' and the plurality of f are as defined above. Also, g1 is an integer from 1 to 1,000, and is preferably an integer from 1 to 50; h1 is an integer from 1 to 1,000, and preferably an integer from 1 to 50; and g1+h1 is an integer from 1 to 50.

The organopolysiloxanes of formula (5) are more preferably exemplified by the following: 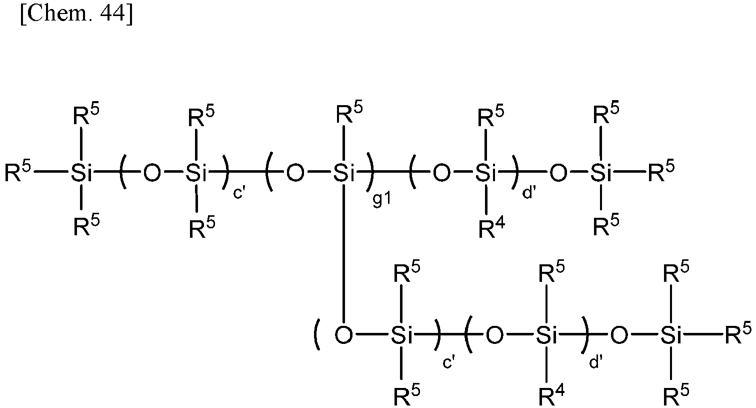 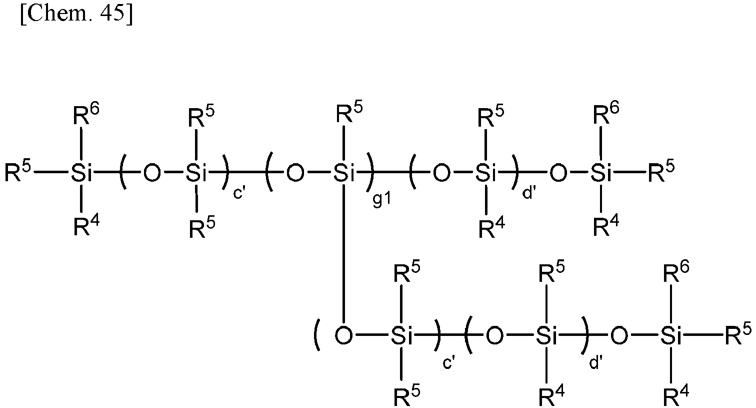 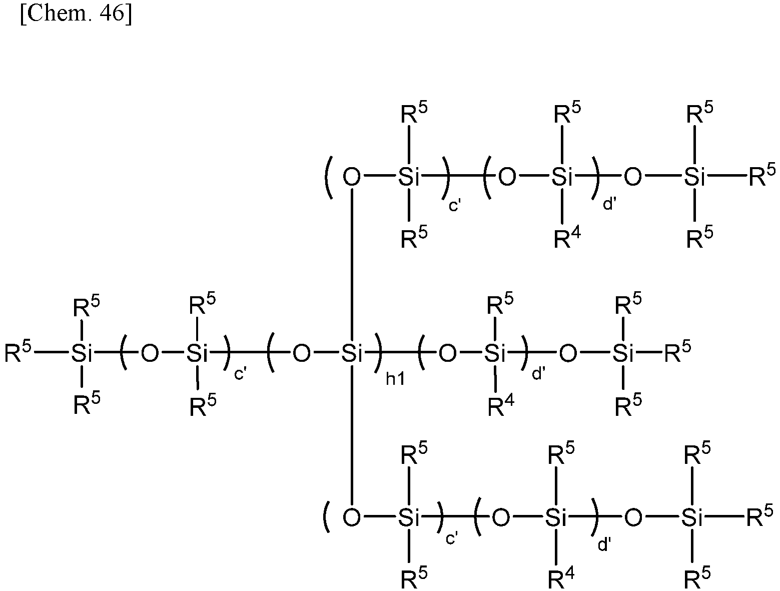 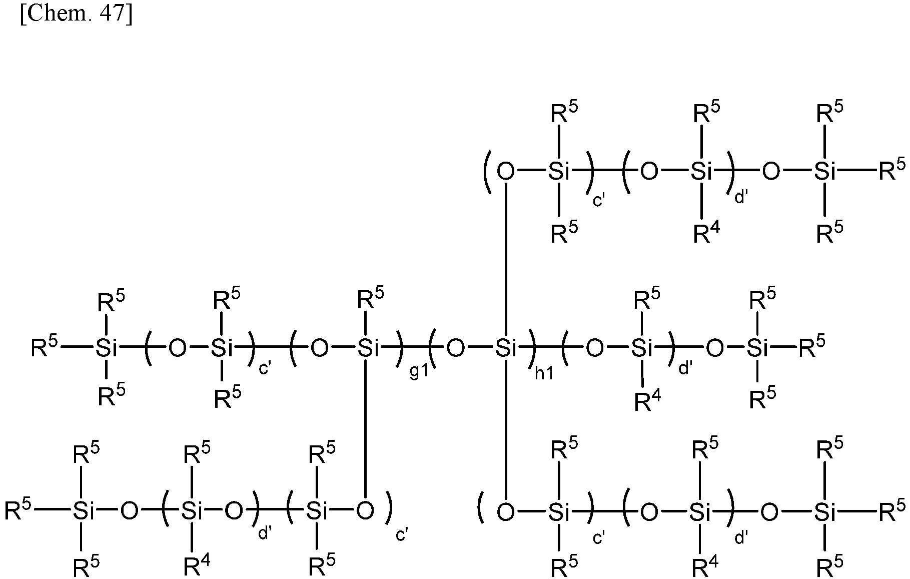 (wherein R⁴, R⁵, R⁶, c', d', the sum of all c', the sum of all d', g1, h1 and g1+h1 are as defined above).

Specific examples of the organopolysiloxanes of formula (4) include the following compounds: 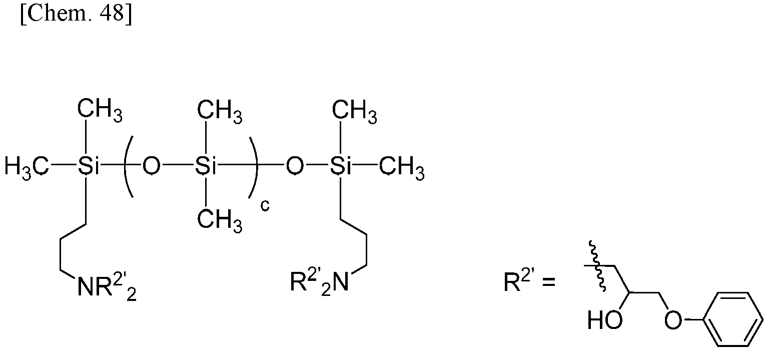 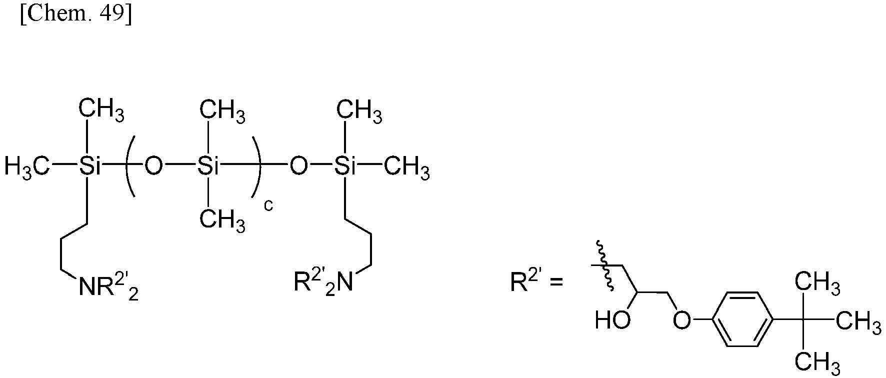 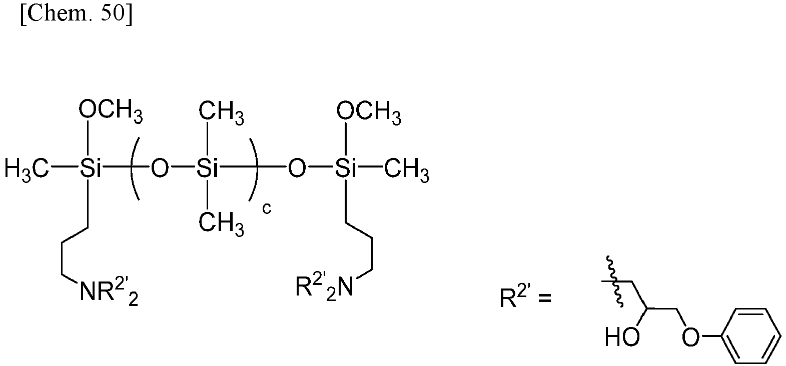 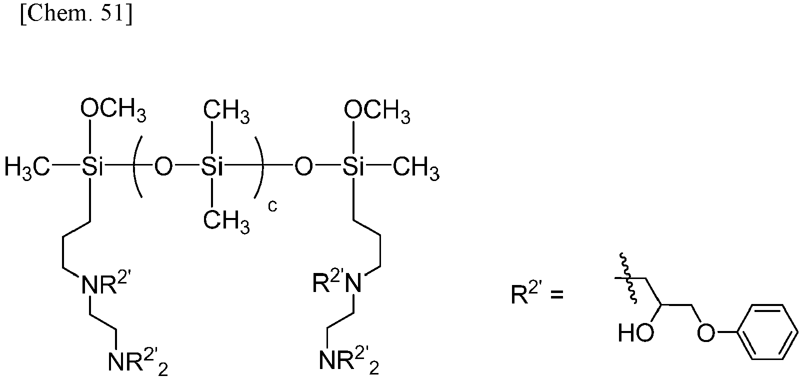 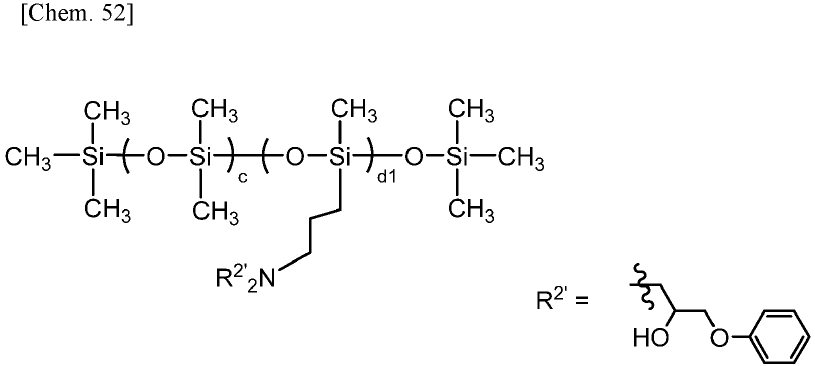 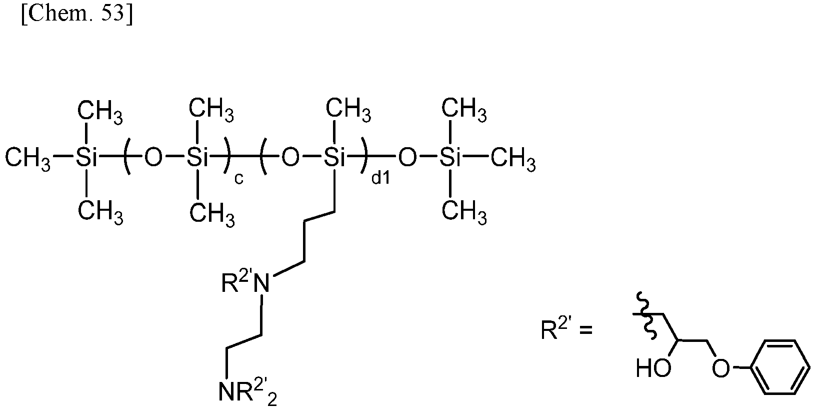 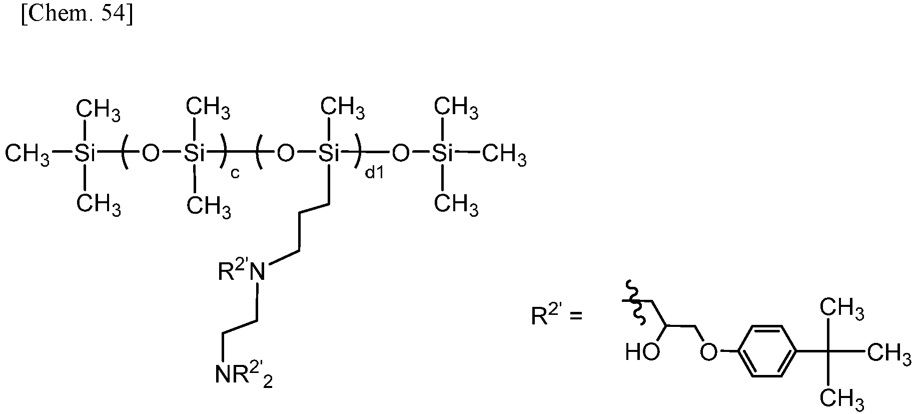 (wherein c and d1 are as defined above, R^{2'} may include, aside from the above-mentioned groups, up to 70 mol% of hydrogen atoms; and a wavy line indicates a bonding site).

Specific examples of the organopolysiloxanes of formula (5) include the following compounds: 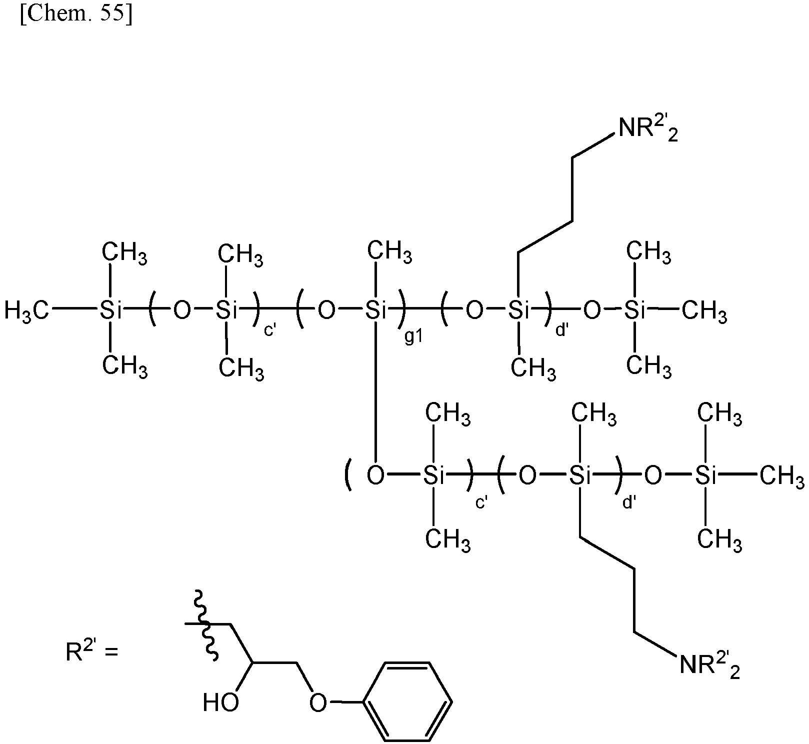 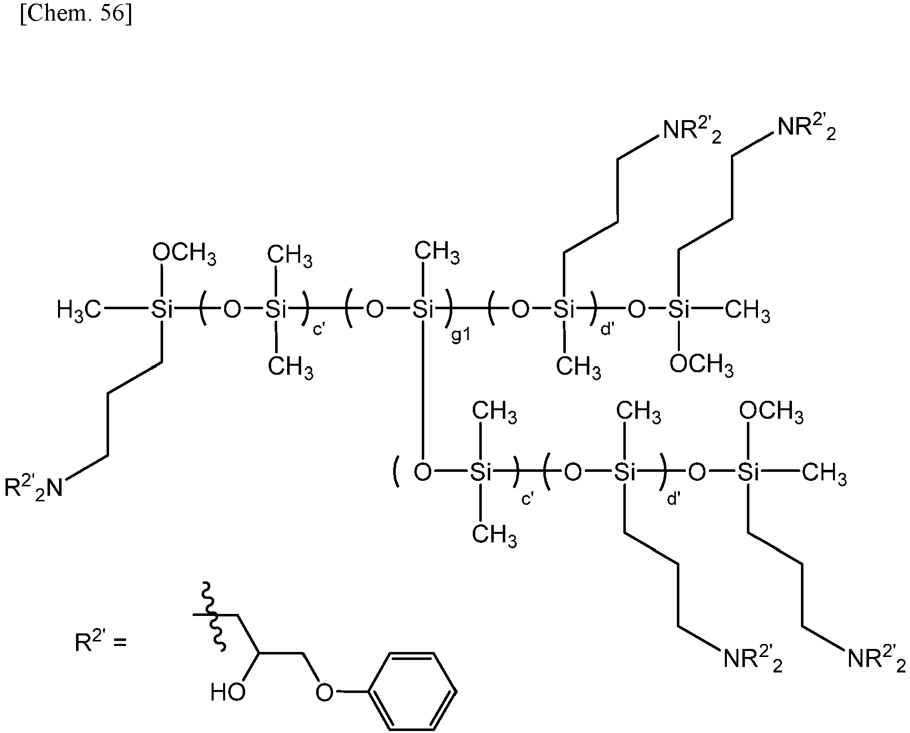 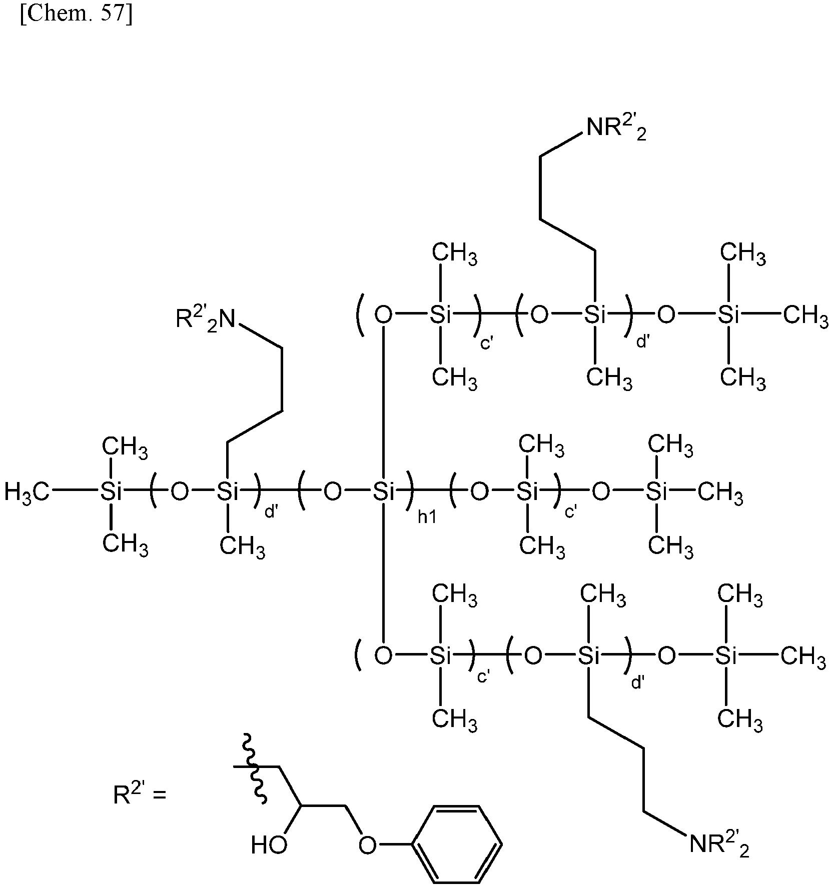 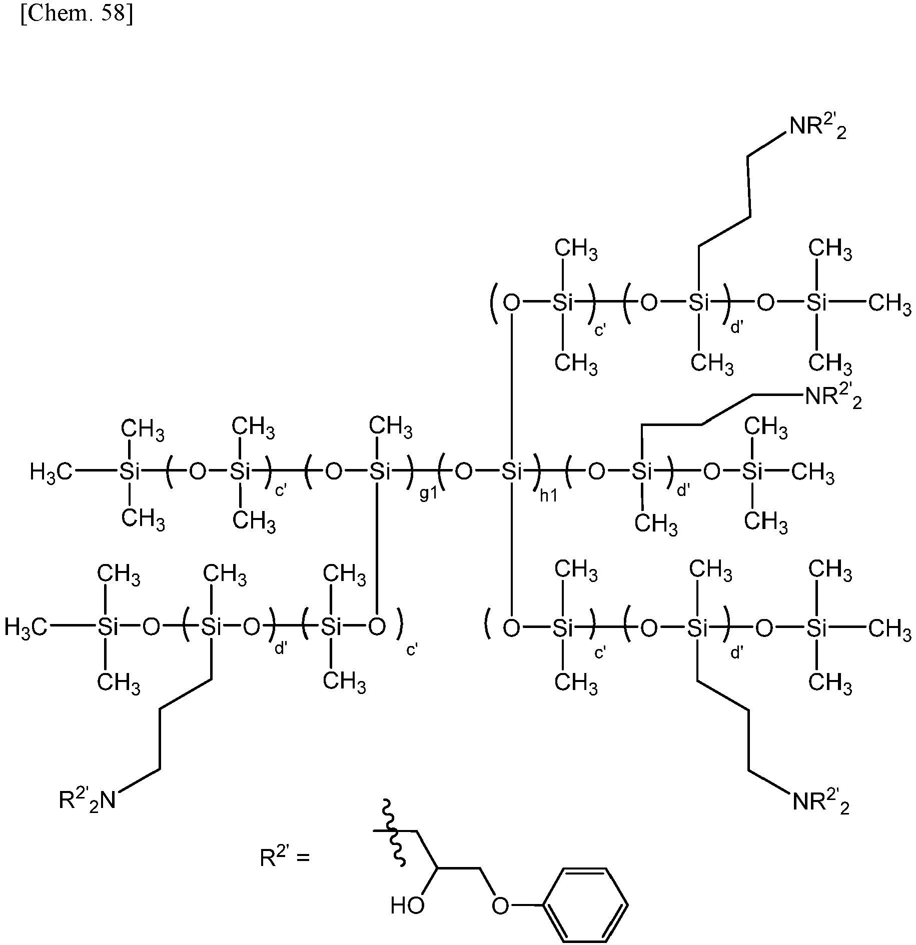 (wherein c', d', the sum of all c', the sum of all d', g1, h1 and g1+h1 are as defined above; R^{2'} may include, aside from the above-mentioned groups, up to 70 mol% of hydrogen atoms; and a wavy line indicates a bonding site).

### [Method for Preparing Organopolysiloxanes]

The amino group-containing organopolysiloxanes of general formulas (4) and (5) that are organopolysiloxanes according to the present invention can be easily obtained by known methods of synthesis. For example, they can be easily obtained by the reaction of an organopolysiloxane of general formula (6) or (7) below with an aromatic group-containing epoxy compound of general formula (8) and/or (9) below: 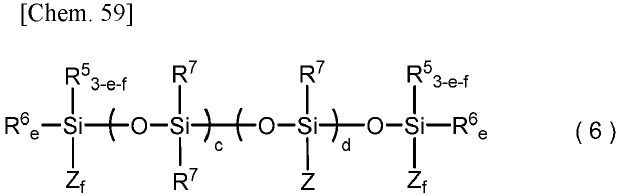 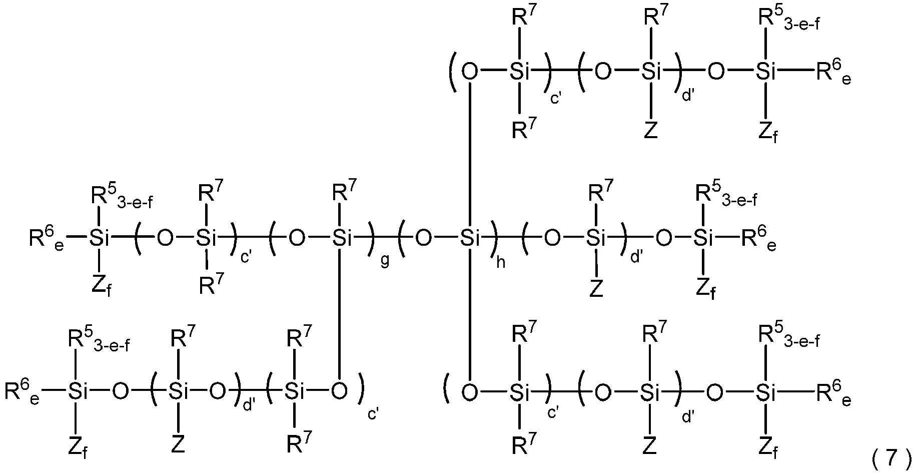 (in formulas (6) and (7), R⁵, R⁶, R⁷, c, c', d, d', e, f, g, h, the sum of all c', the sum of all d', e+f at each end of the molecule, the sum of d and the plurality of f, the sum of the plurality of d' and the plurality of f, and g+h are as defined above; and Z is a group of the following formula 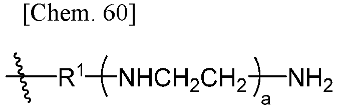 (wherein R¹ and the subscript 'a' are as defined above, and the wavy line indicates a bonding site)) 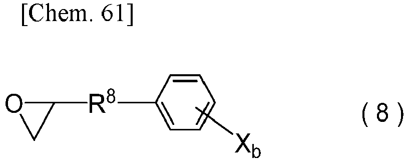 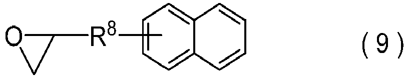 (in formulas (8) and (9), X and b are as defined above, and R⁸ is a single bond or a divalent organic group of 1 to 8 carbon atoms).

In formulas (6) and (7), examples of Z include the following: 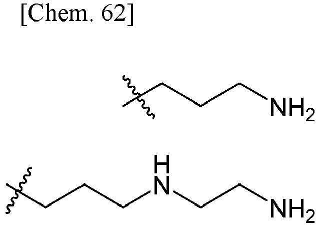 (wherein the wavy line represents a bonding site).

The organopolysiloxane of formula (6) is exemplified by the following: 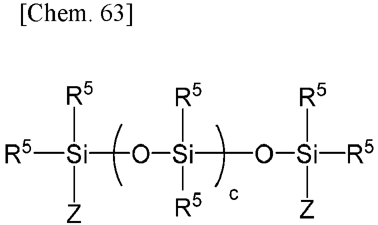 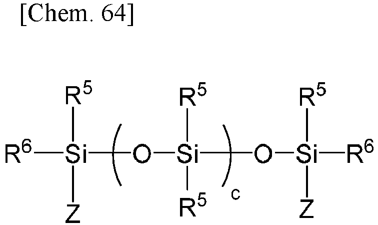 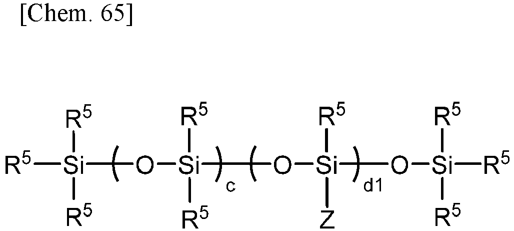 (wherein R⁵, R⁶, Z, c and d1 are as defined above).

The organopolysiloxane of formula (7) is exemplified by the following: 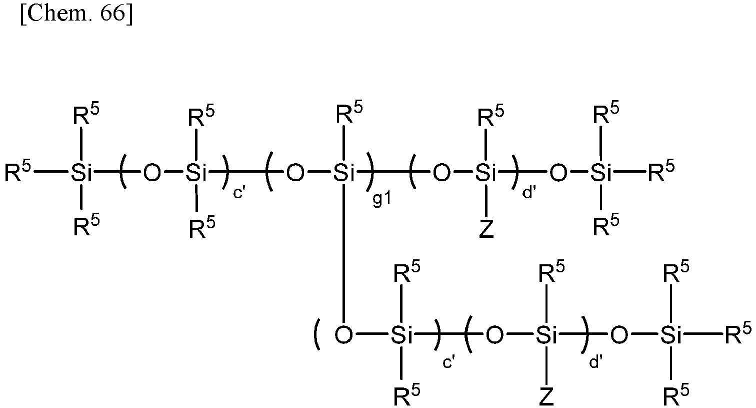 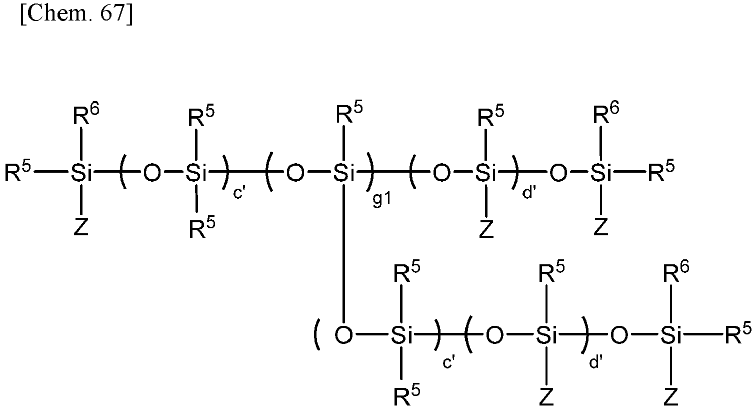 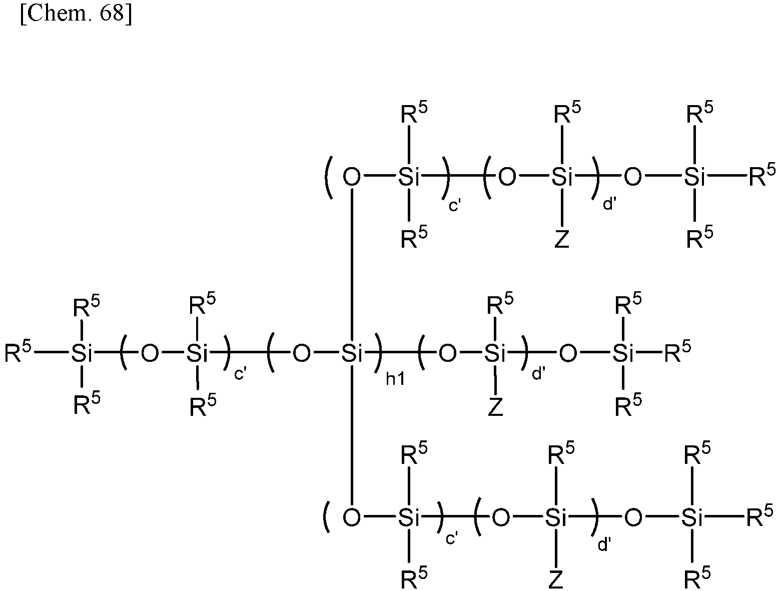 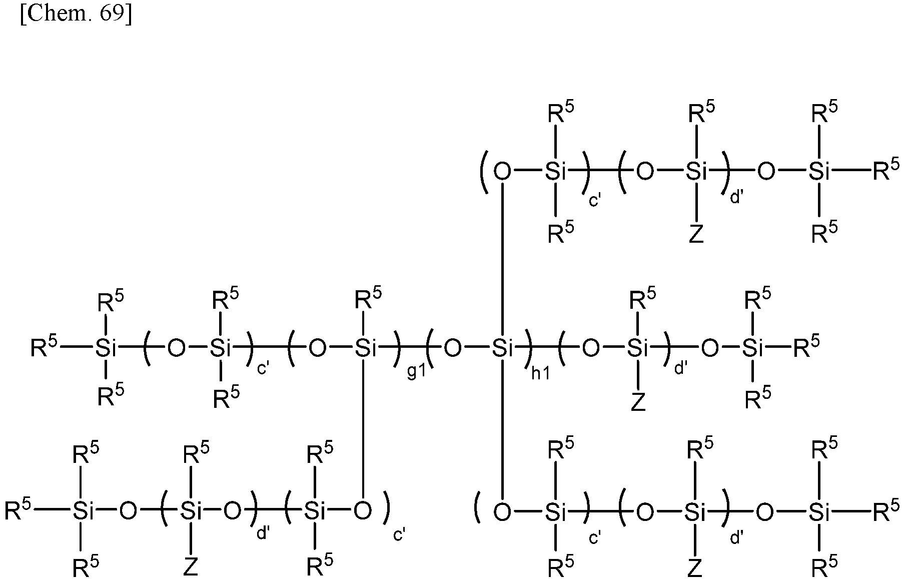 (wherein R⁵, R⁶, Z, c', d', the sum of all c', the sum of all d', g1, h1 and g1+h1 are as defined above).

The organopolysiloxanes of formulas (6) and (7) have a viscosity at 25°C that is preferably from 5 to 100,000 mPa·s, more preferably from 10 to 50,000 mPa·s, and even more preferably from 20 to 40,000 mPa·s.

The organopolysiloxanes of formulas (6) and (7) have amine equivalent weights of preferably from 150 to 17,500 g/mol, and more preferably from 200 to 8,000 g/mol. This amine equivalent weight refers to the molecular weight of the organopolysiloxane divided by the number of nitrogen atoms. The amine equivalent weight can be measured by neutralization titration using, for example, an automatic titrator from Hiranuma Sangyo Co., Ltd.

The organopolysiloxanes of formulas (6) and (7) can be easily obtained by known methods of synthesis. For example, they can be obtained by an equilibration reaction, in the presence of a catalyst such as an alkali metal hydroxide or tetramethylammonium hydroxide, of a cyclic siloxane such as octamethylcyclotetrasiloxane with a compound selected from among aminoalkyl group-containing alkoxysilanes such as 3-aminopropyldimethoxymethylsilane and N-(2-aminoethyl)-3-aminopropyldimethoxymethylsilane, or a hydrolysate thereof, and another starting material such as hexamethyldisiloxane.

Alternatively they can be obtained by a demethanolation reaction, in the absence of a catalyst or in the presence of a catalyst such as an alkali metal hydroxide, between a dimethylpolysiloxane capped at both ends with hydroxyl groups and an aminoalkyl group-containing alkoxysilane such as 3-aminopropyldimethoxymethylsilane, 3-aminopropylmethoxydimethylsilane or N-(2-aminoethyl)-3-aminopropyldimethoxymethylsilane.

In formulas (8) and (9), R⁸ is a single bond or a divalent organic group of 1 to 8 carbon atoms, preferably 1 to 4 carbon atoms. Specific examples of the divalent organic group include the following.

-CH₂O-

-CH₂CH₂CH₂CH₂-

The aromatic group-containing epoxy compounds of formulas (8) and (9) are exemplified by the following 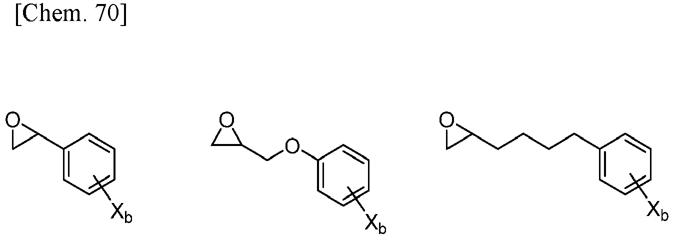 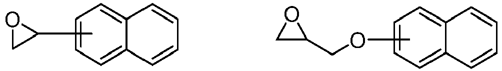 (wherein X and b are as defined above).

The aromatic group-containing epoxy compounds of formulas (8) and (9) have epoxy equivalent weights of preferably from 50 to 5,000 g/mol, and more preferably from 100 to 3,000 g/mol. In this invention, "epoxy equivalent weight" refers to the molecular weight of the compound divided by the number of epoxy groups thereon. The epoxy equivalent weight can be measured by titration using, for example, an automatic titrator from Hiranuma Sangyo Co., Ltd.

The aromatic group-containing epoxy compounds of formulas (8) and (9) may be of one type used alone, or two or more types may be used together.

The organopolysiloxane of formula (6) or (7) and the aromatic group-containing epoxy compound of formula (8) and/or (9) are used in amounts which are preferably such that the ratio of the number of epoxy groups on the aromatic group-containing epoxy compound of formula (8) and/or (9) to the total number of nitrogen-bonded hydrogen atoms (-NH) on the organopolysiloxane of formula (6) or (7) is from 0.3 to 1.2, and especially from 0.3 to 0.95. When the amount of the aromatic group-containing epoxy compound of formula (8) and/or (9) is too small, the heat resistance may be inferior; when it is too large, the softness-imparting effect on textile fibers may be poor.

In this invention, of the NH groups included in the organopolysiloxane of formula (6) or (7), it is desirable for at least 30 mol%, preferably from 30 to 95 mol%, more preferably from 40 to 95 mol%, and even more preferably from 50 to 95 mol%, to react with the aromatic group-containing epoxy compound of formula (8) and/or (9) to become groups of formula (1).

The reaction of the organopolysiloxane of formula (6) or (7) with the aromatic group-containing epoxy compound of formula (8) and/or (9) should be carried out in accordance with a method known to the art, but is not particularly limited. The reaction may be carried out, for example, in the absence of a solvent or in the presence of a solvent such as a lower alcohol (e.g., isopropyl alcohol), toluene or xylene, at a temperature of between 50°C and 120°C, especially between 70°C and 100°C, and for a period of from 1 to 5 hours, especially from 2 to 4 hours.

By reacting the organopolysiloxane of formula (6) or (7) with the aromatic group-containing epoxy compound of formula (8) and/or (9) by the above method, organopolysiloxanes of formula (4) and (5) that are organopolysiloxanes according to the invention can be obtained.

### [Textile Treatment]

The inventive organopolysiloxane having, on a molecular terminal and/or a side chain, a group of formula (1) has an excellent heat resistance, resists discoloration and changes in appearance even after heating, and can impart an excellent softness to textile fiber surfaces following treatment, all of which makes it well-suited for use in textile treatments.

Various solvents may be optionally used in the textile treatment of the invention. Exemplary solvents include ether-type solvents such as dibutyl ether, dioxane and tetrahydrofuran (THF); ketone-type solvents such as acetone and methyl ethyl ketone (MEK); alcohol-type solvents such as methanol, ethanol, 2-propanol, n-butanol, sec-butanol, 2-ethyl-1-hexanol, 2-methoxyethanol, 2-ethoxyethanol, 2-butoxyethanol, ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethyl-1,6-hexanediol, 1,2-octanediol, 1,2-decanediol, 2,2,4-trimethylpentanediol, 2-butyl-2-ethyl-1,3-propanediol and 2,2-diethyl-1,3-propanediol; and aromatic solvents such as toluene and xylene. These solvents may be used singly or two or more may be used together.

When a solvent is included, the amount of solvent used, although not particularly limited, is preferably from 2,000 to 200,000 parts by weight, and more preferably from 5,000 to 100,000 parts by weight, per 100 parts by weight of the organopolysiloxane.

In cases where the textile treatment of the invention is rendered into an emulsion, the emulsifying agent used is not particularly limited. Examples of nonionic surfactants include ethoxylated higher alcohols, ethoxylated alkyl phenols, polyol fatty acid esters, ethoxylated polyol fatty acid esters, ethoxylated fatty acids, ethoxylated fatty acid amides, sorbitol, sorbitan fatty acid esters, ethoxylated sorbitan fatty acid esters and sucrose fatty acid esters. These have a hydrophilic-lipophilic balance (HLB) that is preferably in the range of 5 to 20, and more preferably in the range of 10 to 16. Examples of anionic surfactants include higher alcohol sulfuric acid ester salts, alkyl phenyl ether sulfuric acid ester salts, alkylbenzene sulfonic acid salts, higher alcohol phosphoric acid ester salts, ethoxylated higher alcohol sulfuric acid ester salts, ethoxylated alkyl phenyl ether sulfuric acid ester salts and ethoxylated higher alcohol phosphoric acid salts. Examples of cationic surfactants include alkyltrimethylammonium chlorides, alkylamine hydrochlorides, cocoamine acetate, alkylamine acetates and alkylbenzenedimethylammonium chlorides. Examples of amphoteric surfactants include N-acylamidopropyl-N,N-dimethylammonium betaines and N-acylamidopropyl-N,N'-dimethyl-N'-β-hydroxypropylammonium betaines.

When an emulsifying agent is included, the amount used per 100 parts by weight of the organopolysiloxane is preferably from 5 to 50 parts by weight, and more preferably from 10 to 30 parts by weight. The amount of water used during emulsification may be set such that the concentration of organopolysiloxane, expressed in terms of the pure component, is from 10 to 80 wt%, and preferably from 20 to 70 wt%.

The above emulsion can be obtained by a known method. The organopolysiloxane and the surfactant are mixed together, and this mixture is emulsified using an emulsifier such as a homogenizing mixer, homogenizer, colloid mill, line mixer, universal mixer (trade name), Ultra Mixer (trade name), Planetary Mixer (trade name), Combi Mix (trade name) or three-roll mixer.

In addition, textile finishes such as anti-creasing agents, flame retardants, antistatic agents and heat stabilizers, and also ingredients such as antioxidants, ultraviolet absorbers, pigments, metal flake pigments, rheology control agents, curing accelerators, deodorants and antimicrobial agents may be added to the textile treatment of the invention within ranges that do not detract from the objects of the invention.

When the textile treatment of the invention is applied to textile fibers, application to the fibers may be carried out by dipping, spraying or roll coating. The pickup differs with the type of fiber and is not particularly limited, although the pickup of the organopolysiloxane included in the textile treatment is generally set in the range of 0.01 to 10 wt% of the fibers. The fibers may then be dried by hot air blowing, a heating oven or the like. Although the conditions vary with the type of fiber, drying may be carried out at between 100°C and 180°C for a period of from 30 seconds to 5 minutes.

The fiber treatment of the invention is not particularly limited as to the textile fibers and textile products treatable therewith, and is effective on natural fibers such as cotton, silk, linen, wool, angora and mohair; on synthetic fibers such as polyester, polyethylene, polypropylene, nylon, acrylics and spandex; and also on blended fibers obtained by combining these. Nor are there any limitations on the form and shape of such textile fibers and textile products, the textile treatment of the invention being suitable for use in treating not only raw materials such as staple fiber, filament, tow and yarn, but also various processed forms such as knit fabric, woven fabric, batting and nonwoven fabric.

In addition to textile treatment applications, the inventive organopolysiloxane having a group of formula (1) on a molecular terminal and/or a side chain may be utilized in various other applications as well, such as coatings, adhesives, sealants, inks, impregnants and surface treatments for paper and the like, and cosmetics. Where needed, additives may be used at this time.

Examples of additives include textile finishes such as anti-creasing agents, flame retardants, antistatic agents and heat stabilizers, and also antioxidants, ultraviolet absorbers, pigments, metal flake pigments, rheology control agents, curing accelerators, deodorants and antimicrobial agents. These additives may be used singly, or two or more may be used together.

### EXAMPLES

The invention is described more fully below by way of Synthesis Examples, Examples according to the invention and Comparative Examples, although these Examples do not limit the invention. In the Examples below, the viscosities are values measured at 25°C with a BM-type viscometer (Tokyo Keiki, Inc.), and the amine equivalent weights and epoxy equivalent weights are values measured with an automatic titrator from Hiranuma Sangyo Co., Ltd.

### [Synthesis Example 1]

A separable flask equipped with a thermometer, a stirrer, a reflux condenser and a nitrogen gas inlet was charged with 100.00 g of the aminoalkyl group-containing organopolysiloxane of formula (A-1) below (viscosity, 25 mP·s; amine equivalent weight, 840 g/mol), 34.15 g of the phenyl glycidyl ether of formula (B-1) below (epoxy equivalent weight, 151 g/mol)--this being an amount such that the ratio of the number of glycidyl groups on the phenyl glycidyl ether to the total number of nitrogen-bonded hydrogen atoms (-NH) on the aminoalkyl group-containing organopolysiloxane is 0.95, and 3.35 g of isopropyl alcohol, and an addition reaction was carried out for 4 hours at 80°C under a nitrogen gas atmosphere. Following reaction completion, removal of the low-boiling fraction was carried out for 2 hours at 110°C under a reduced pressure of 10 mmHg, giving 130 g of an oily compound (the organopolysiloxane of formula (C-1) below). The compound thus obtained had a clear and colorless appearance, a viscosity of 1,120 mPa·s and an amine equivalent weight of 1,060 g/mol. The ¹H-NMR of the resulting compound was measured, whereupon the amount of unreacted glycidyl groups was found to be 5 mol% of the charged amount, suggesting that 90 mol% of the nitrogen-bonded hydrogen atoms (-NH) on the organopolysiloxane had reacted with glycidyl groups. 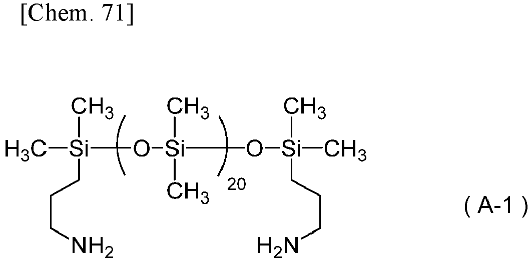 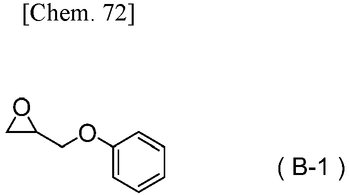 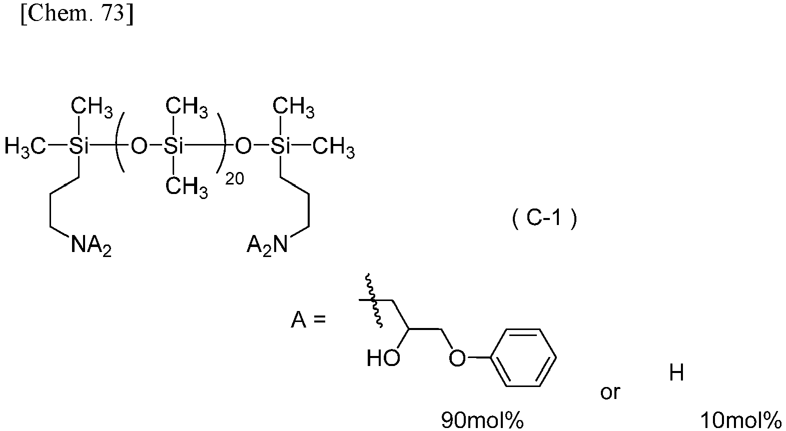 (wherein the wavy line indicates a bonding site)

### [Synthesis Example 2]

A separable flask equipped with a thermometer, a stirrer, a reflux condenser and a nitrogen gas inlet was charged with 100.00 g of the aminoalkyl group-containing organopolysiloxane of above formula (A-1) (viscosity, 25 mP·s; amine equivalent weight, 840 g/mol), 17.98 g of the phenyl glycidyl ether of above formula (B-1) (epoxy equivalent weight, 151 g/mol)--this being an amount such that the ratio of the number of glycidyl groups on the phenyl glycidyl ether to the total number of nitrogen-bonded hydrogen atoms (-NH) on the aminoalkyl group-containing organopolysiloxane is 0.50, and 2.95 g of isopropyl alcohol, and an addition reaction was carried out for 4 hours at 80°C under a nitrogen gas atmosphere. Following reaction completion, removal of the low-boiling fraction was carried out for 2 hours at 110°C under a reduced pressure of 10 mmHg, giving 105 g of an oily compound (the organopolysiloxane of formula (C-2) below). The compound thus obtained had a clear and colorless appearance, a viscosity of 250 mPa·s and an amine equivalent weight of 930 g/mol. The ¹H-NMR of the resulting compound was measured, whereupon unreacted glycidyl groups were not detected, suggesting that 50 mol% of the nitrogen-bonded hydrogen atoms (-NH) on the organopolysiloxane had reacted with glycidyl groups. 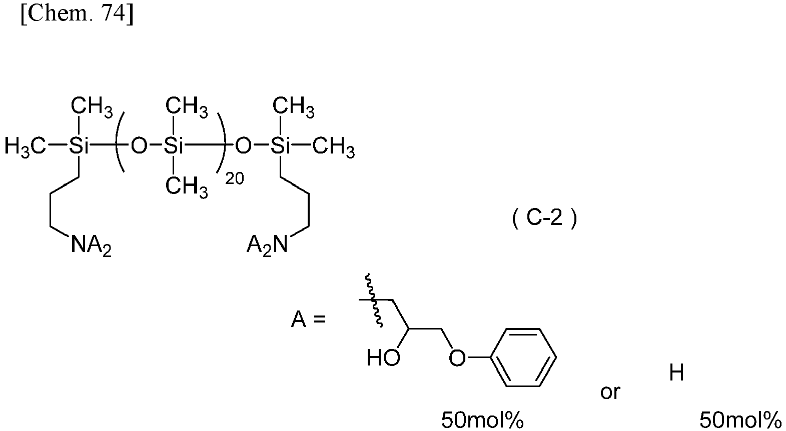 (wherein the wavy line indicates a bonding site)

### [Synthesis Example 3]

A separable flask equipped with a thermometer, a stirrer, a reflux condenser and a nitrogen gas inlet was charged with 100.00 g of the aminoalkyl group-containing organopolysiloxane of above formula (A-1) (viscosity, 25 mP·s; amine equivalent weight, 840 g/mol), 10.79 g of the phenyl glycidyl ether of above formula (B-1) (epoxy equivalent weight, 151 g/mol)--this being an amount such that the ratio of the number of glycidyl groups on the phenyl glycidyl ether to the total number of nitrogen-bonded hydrogen atoms (-NH) on the aminoalkyl group-containing organopolysiloxane is 0.30, and 2.77 g of isopropyl alcohol, and an addition reaction was carried out for 4 hours at 80°C under a nitrogen gas atmosphere. Following reaction completion, removal of the low-boiling fraction was carried out for 2 hours at 110°C under a reduced pressure of 10 mmHg, giving 98 g of an oily compound (the organopolysiloxane of formula (C-3) below). The compound thus obtained had a clear and colorless appearance, a viscosity of 110 mPa·s and an amine equivalent weight of 870 g/mol. The ¹H-NMR of the resulting compound was measured, whereupon unreacted glycidyl groups were not detected, suggesting that 30 mol% of the nitrogen-bonded hydrogen atoms (-NH) on the organopolysiloxane had reacted with glycidyl groups. 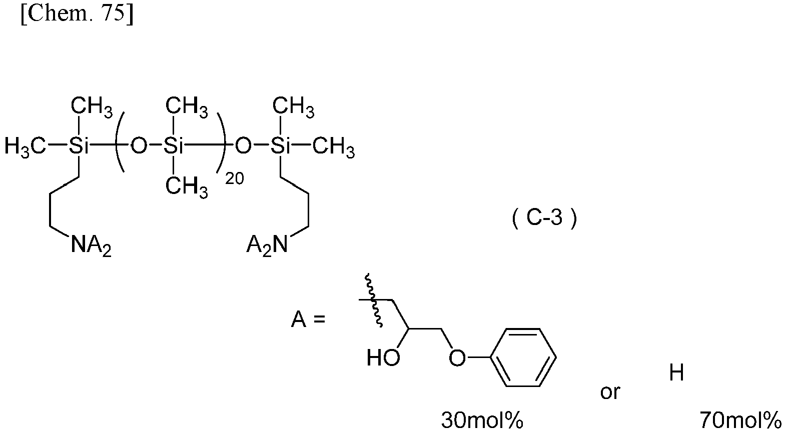 (wherein the wavy line indicates a bonding site)

### [Synthesis Example 4]

A separable flask equipped with a thermometer, a stirrer, a reflux condenser and a nitrogen gas inlet was charged with 100.00 g of the aminoalkyl group-containing organopolysiloxane of formula (A-2) below (viscosity, 1,400 mP·s; amine equivalent weight, 1,700 g/mol), 12.66 g of the phenyl glycidyl ether of above formula (B-1) (epoxy equivalent weight, 151 g/mol)--this being an amount such that the ratio of the number of glycidyl groups on the phenyl glycidyl ether to the total number of nitrogen-bonded hydrogen atoms (-NH) on the aminoalkyl group-containing organopolysiloxane is 0.95, and 2.82 g of isopropyl alcohol, and an addition reaction was carried out for 4 hours at 80°C under a nitrogen gas atmosphere. Following reaction completion, removal of the low-boiling fraction was carried out for 2 hours at 110°C under a reduced pressure of 10 mmHg, giving 107 g of an oily compound (the organopolysiloxane of formula (C-4) below). The compound thus obtained had a clear and colorless appearance, a viscosity of 23,700 mPa·s and an amine equivalent weight of 3,740 g/mol. The ¹H-NMR of the resulting compound was measured, whereupon the amount of unreacted glycidyl groups was found to be 80 mol% of the charged amount, suggesting that 87 mol% of the nitrogen-bonded hydrogen atoms (-NH) on the organopolysiloxane had reacted with glycidyl groups. 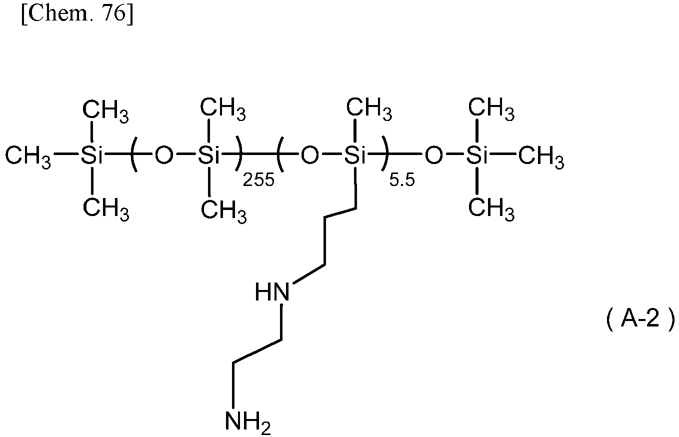 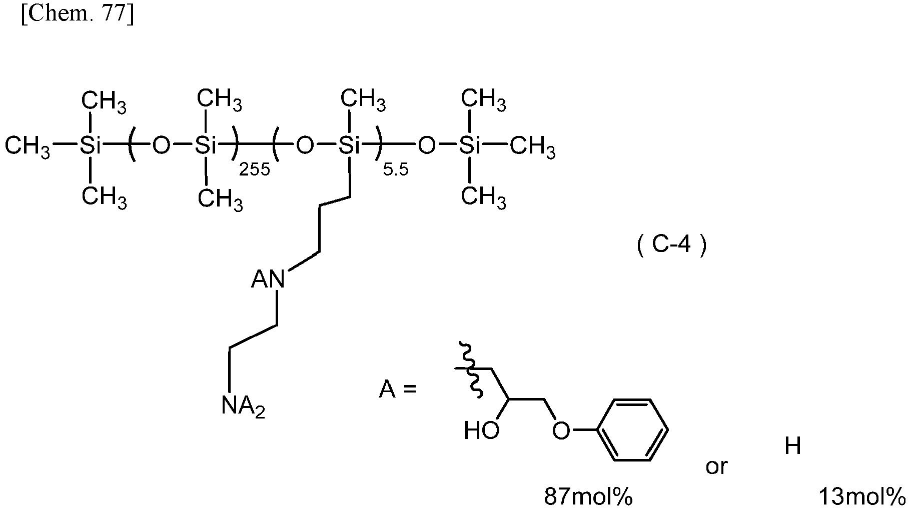 (wherein the wavy line indicates a bonding site)

### [Synthesis Example 5]

A separable flask equipped with a thermometer, a stirrer, a reflux condenser and a nitrogen gas inlet was charged with 100.00 g of the aminoalkyl group-containing organopolysiloxane of above formula (A-2) (viscosity, 1,400 mP·s; amine equivalent weight, 1,700 g/mol), 6.66 g of the phenyl glycidyl ether of above formula (B-1) (epoxy equivalent weight, 151 g/mol)--this being an amount such that the ratio of the number of glycidyl groups on the phenyl glycidyl ether to the total number of nitrogen-bonded hydrogen atoms (-NH) on the aminoalkyl group-containing organopolysiloxane is 0.50, and 2.67 g of isopropyl alcohol, and an addition reaction was carried out for 4 hours at 80°C under a nitrogen gas atmosphere. Following reaction completion, removal of the low-boiling fraction was carried out for 2 hours at 110°C under a reduced pressure of 10 mmHg, giving 92 g of an oily compound (the organopolysiloxane of formula (C-5) below). The compound thus obtained had a clear and colorless appearance, a viscosity of 5,900 mPa·s and an amine equivalent weight of 2,660 g/mol. The ¹H-NMR of the resulting compound was measured, whereupon unreacted glycidyl groups were not detected, suggesting that 50 mol% of the nitrogen-bonded hydrogen atoms (-NH) on the organopolysiloxane had reacted with glycidyl groups. 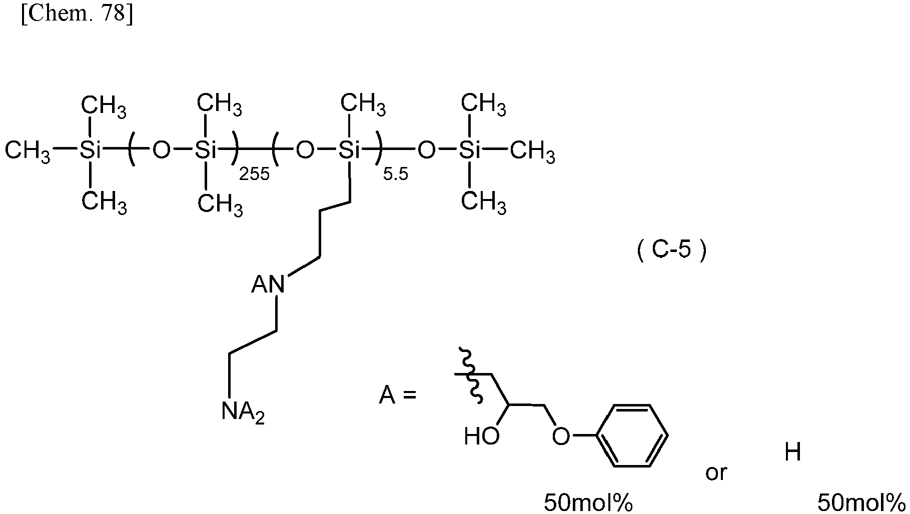 (wherein the wavy line indicates a bonding site)

### [Synthesis Example 6]

A separable flask equipped with a thermometer, a stirrer, a reflux condenser and a nitrogen gas inlet was charged with 100.00 g of the aminoalkyl group-containing organopolysiloxane of above formula (A-1) (viscosity, 25 mP·s; amine equivalent weight, 840 g/mol), 50.89 g of the p-tert-butylphenyl glycidyl ether of formula (B-2) below (epoxy equivalent weight, 225 g/mol)--this being an amount such that the ratio of the number of glycidyl groups on the p-tert-butylphenyl glycidyl ether to the total number of nitrogen-bonded hydrogen atoms (-NH) on the aminoalkyl group-containing organopolysiloxane is 0.95, and 3.77 g of isopropyl alcohol, and an addition reaction was carried out for 4 hours at 80°C under a nitrogen gas atmosphere. Following reaction completion, removal of the low-boiling fraction was carried out for 2 hours at 110°C under a reduced pressure of 10 mmHg, giving 142 g of an oily compound (the organopolysiloxane of formula (C-6) below). The compound thus obtained had a clear and colorless appearance, a viscosity of 6,140 mPa·s and an amine equivalent weight of 1,200 g/mol. The ¹H-NMR of the resulting compound was measured, whereupon the amount of unreacted glycidyl groups was found to be 7 mol% of the charged amount, suggesting that 88 mol% of the nitrogen-bonded hydrogen atoms (-NH) on the organopolysiloxane had reacted with glycidyl groups.

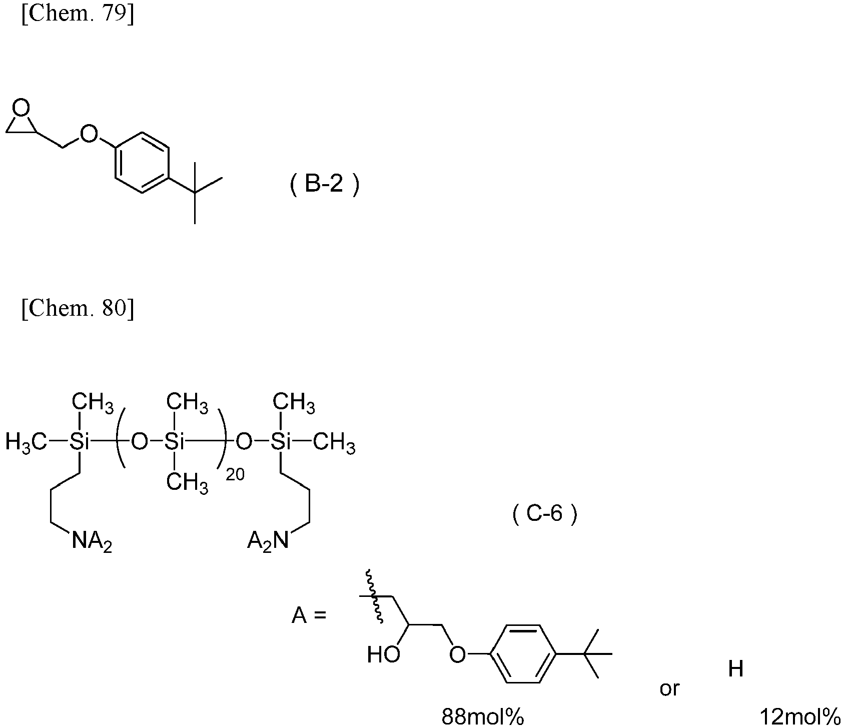

### (wherein the wavy line indicates a bonding site)

### [Synthesis Example 7 (Comparative Synthesis Example 1)]

A separable flask equipped with a thermometer, a stirrer, a reflux condenser and a nitrogen gas inlet was charged with 100.00 g of the aminoalkyl group-containing organopolysiloxane of above formula (A-1) (viscosity, 25 mP·s; amine equivalent weight, 840 g/mol), 78.94 g of the polyethylene glycol monobutyl monoglycidyl ether of formula (B-3) below (epoxy equivalent weight, 349 g/mol)--this being an amount such that the ratio of the number of glycidyl groups on the polyethylene glycol monobutyl monoglycidyl ether to the total number of nitrogen-bonded hydrogen atoms (-NH) on the aminoalkyl group-containing organopolysiloxane is 0.95, and 4.47 g of isopropyl alcohol, and an addition reaction was carried out for 4 hours at 80°C under a nitrogen gas atmosphere. Following reaction completion, removal of the low-boiling fraction was carried out for 2 hours at 110°C under a reduced pressure of 10 mmHg, giving 170 g of an oily compound (the organopolysiloxane of formula (C-7) below). The compound thus obtained had a light yellow appearance, a viscosity of 220 mPa·s and an amine equivalent weight of 1,410 g/mol. The ¹H-NMR of the resulting compound was measured, whereupon the amount of unreacted glycidyl groups was found to be 5 mol% of the charged amount, suggesting that 90 mol% of the nitrogen-bonded hydrogen atoms (-NH) on the organopolysiloxane had reacted with glycidyl groups. 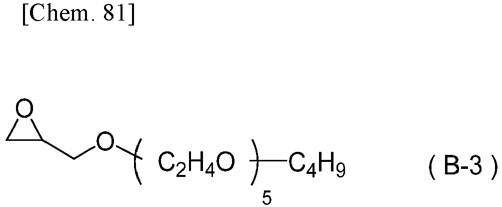 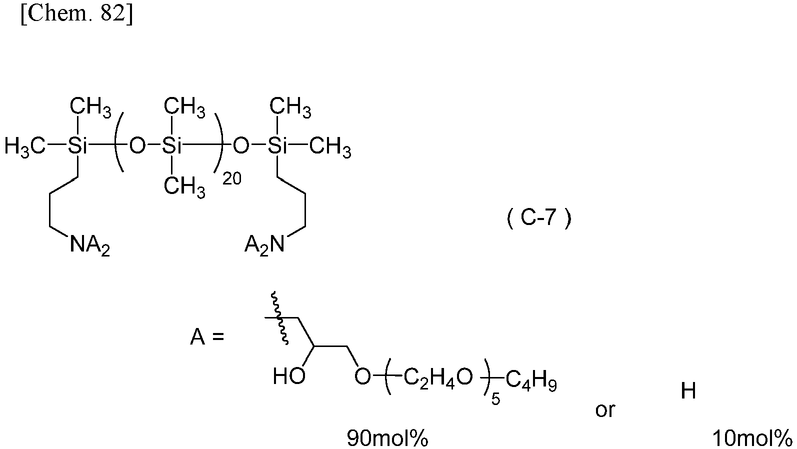 (wherein the wavy line indicates a bonding site)

### [Synthesis Example 8 (Comparative Synthesis Example 2)]

A separable flask equipped with a thermometer, a stirrer, a reflux condenser and a nitrogen gas inlet was charged with 100.00 g of the aminoalkyl group-containing organopolysiloxane of above formula (A-1) (viscosity, 25 mP·s; amine equivalent weight, 840 g/mol), 41.55 g of the polyethylene glycol monobutyl monoglycidyl ether of above formula (B-3) (epoxy equivalent weight, 349 g/mol)--this being an amount such that the ratio of the number of glycidyl groups on the polyethylene glycol monobutyl monoglycidyl ether to the total number of nitrogen-bonded hydrogen atoms (-NH) on the aminoalkyl group-containing organopolysiloxane is 0.50, and 3.34 g of isopropyl alcohol, and an addition reaction was carried out for 4 hours at 80°C under a nitrogen gas atmosphere. Following reaction completion, removal of the low-boiling fraction was carried out for 2 hours at 110°C under a reduced pressure of 10 mmHg, giving 130 g of an oily compound (the organopolysiloxane of formula (C-8) below). The compound thus obtained had a light yellow appearance, a viscosity of 160 mPa·s and an amine equivalent weight of 1,210 g/mol. The ¹H-NMR of the resulting compound was measured, whereupon unreacted glycidyl groups were not detected, suggesting that 50 mol% of the nitrogen-bonded hydrogen atoms (-NH) on the organopolysiloxane had reacted with glycidyl groups. 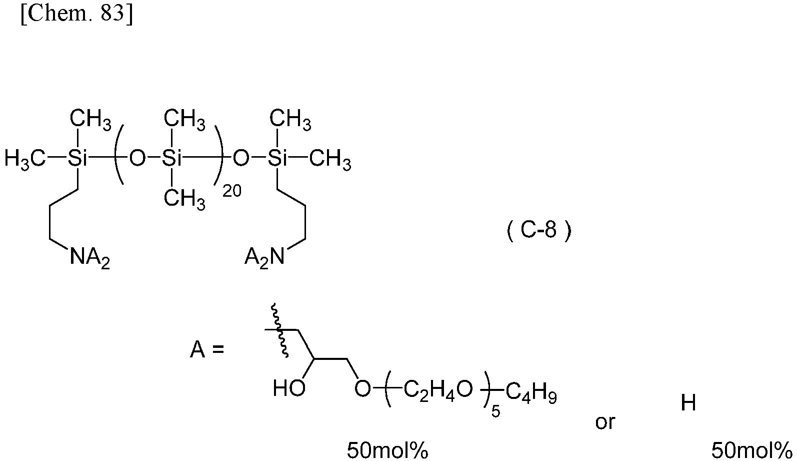 (wherein the wavy line indicates a bonding site)

### [Synthesis Example 9 (Comparative Synthesis Example 3)]

A separable flask equipped with a thermometer, a stirrer, a reflux condenser and a nitrogen gas inlet was charged with 100.00 g of the aminoalkyl group-containing organopolysiloxane of above formula (A-1) (viscosity, 25 mP·s; amine equivalent weight, 840 g/mol), 63.56 g of the alkyl glycidyl ether of formula (B-4) below (epoxy equivalent weight, 281 g/mol)--this being an amount such that the ratio of the number of glycidyl groups on the alkyl glycidyl ether to the total number of nitrogen-bonded hydrogen atoms (-NH) on the aminoalkyl group-containing organopolysiloxane is 0.95, and 4.09 g of isopropyl alcohol, and an addition reaction was carried out for 4 hours at 80°C under a nitrogen gas atmosphere. Following reaction completion, removal of the low-boiling fraction was carried out for 2 hours at 110°C under a reduced pressure of 10 mmHg, giving 155 g of an oily compound (the organopolysiloxane of formula (C-9) below). The compound thus obtained had a light yellow appearance, a viscosity of 300 mPa·s and an amine equivalent weight of 1,300 g/mol. The ¹H-NMR of the resulting compound was measured, whereupon the amount of unreacted glycidyl groups was found to be 3 mol% of the charged amount, suggesting that 92 mol% of the nitrogen-bonded hydrogen atoms (-NH) on the organopolysiloxane had reacted with glycidyl groups. 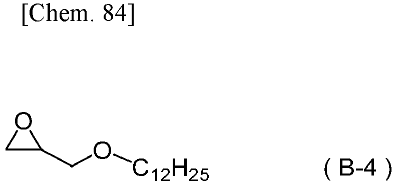 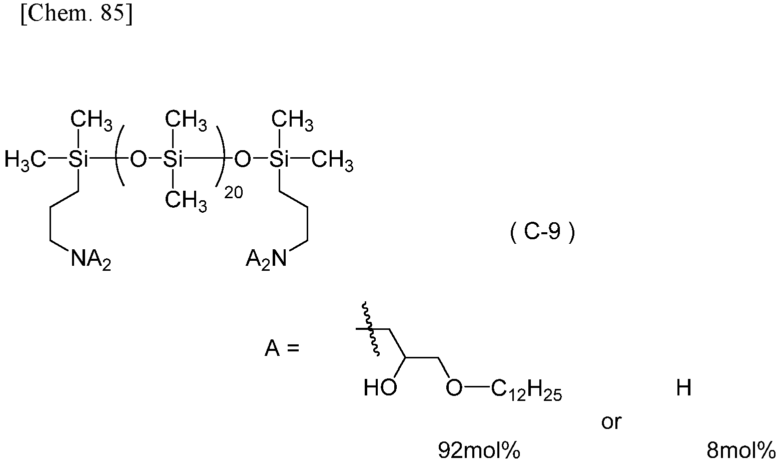 (wherein the wavy line indicates a bonding site)

### [Examples 1 to 6, Comparative Examples 1 to 5]

### [Evaluation Tests]

The evaluation tests shown below were carried out on, as Examples 1 to 6 and Comparative Examples 1 to 3, the organopolysiloxanes of formulas (C-1) to (C-9) obtained in the above Synthesis Examples. In addition, the evaluation tests shown below were carried out on, as Comparative Examples 4 and 5 respectively, the unreacted aminoalkyl group-containing organopolysiloxane of formula (A-1) used in Synthesis Example 1 and the unreacted aminoalkyl group-containing organopolysiloxane of formula (A-2) used in Synthesis Example 4. The results are shown in Table 1.

### 1. 160°C Heat Resistance

The organopolysiloxane was weighed out, in an amount of 2.0 g, into a 6 cm diameter aluminum petri dish and heated for 10 minutes in a drying oven warmed to 160°C. The organopolysiloxane after heating had been carried out was compared to before heating, and rated as "○" when there was no change in appearance, and as "×" when discoloration was observed after heating.

### 2. 200°C Heat Resistance

The organopolysiloxane was weighed out, in an amount of 2.0 g, into a 6 cm diameter aluminum petri dish and heated for 10 minutes in a drying oven warmed to 200°C. The organopolysiloxane after heating had been carried out was compared to before heating and rated as "○" when there was no change in appearance, and as "×" when discoloration was observed after heating.

### 3. Softness

A test liquid was prepared by adding the organopolysiloxane to toluene, stirring, and diluting to a solids concentration of 2 wt%. A polyester/cotton broadcloth (65%/35%, from Tanigashira Shoten) was dipped for 10 seconds in the test liquid, after which the cloth was squeezed using rolls at a degree of expression of 100% and dried for 2 minutes at 150°C, thereby producing a treated cloth for evaluating softness. A panel of three judges tested the treated cloth by touching it with their hands and rated the softness relative to that of untreated cloth according to the following criteria.
⊚: Very pleasant to the touch compared with untreated cloth
○: Pleasant to the touch compared with cloth
△: Pleasantness to the touch is same as that of untreated cloth
×: Unpleasant to the touch compared with untreated cloth

### 4. Durability to Washing

A test liquid was prepared by adding the organopolysiloxane to toluene, stirring, and diluting to a solids concentration of 2 wt%. A polyester/cotton broadcloth (65%/35%, from Tanigashira Shoten) was dipped for 10 seconds in the test liquid, after which the cloth was squeezed using rolls at a degree of expression of 100% and dried for 2 minutes at 150°C, thereby producing a treated cloth for evaluating durability to washing. The treated cloth was then washed once with a washing machine by a procedure in accordance with JIS L0217 103. The amount of silicone remaining on the fiber surfaces after a single wash was measured with a fluorescence x-ray spectrometer (Rigaku Corporation). The residual ratio (%) compared with when washing is not carried out was calculated.
⊚: Residual ratio was 80% or more
○: Residual ratio was at least 50% but less than 80%
△: Residual ratio was at least 30% but less than 50%
×: Residual ratio was less than 30%

**[Table 1]**

| | Organopolysiloxane | 160°C Heat resistance | 200°C Heat resistance | Softness | Durability to washing |
|---|---|---|---|---|---|
| Example 1 | Synthesis Example 1 (C-1) | ○ | ○ | ○ | ○ |
| Example 2 | Synthesis Example 2 (C-2) | ○ | ○ | ○ | ⊚ |
| Example 3 | Synthesis Example 3 (C-3) | ○ | ○ | ○ | ⊚ |
| Example 4 | Synthesis Example 4 (C-4) | ○ | ○ | ⊚ | ○ |
| Example 5 | Synthesis Example 5 (C-5) | ○ | ○ | ⊚ | ⊚ |
| Example 6 | Synthesis Example 6 (C-6) | ○ | ○ | ○ | ○ |
| Comparative Example 1 | Synthesis Example 7 (C-7) | × | × | ○ | × |
| Comparative Example 2 | Synthesis Example 8 (C-8) | × | × | ○ | △ |
| Comparative Example 3 | Synthesis Example 9 (C-9) | × | × | ○ | ○ |
| Comparative Example 4 | (A-1) | ○ | × | ○ | ⊚ |
| Comparative Example 5 | (A-2) | ○ | × | ⊚ | ⊚ |

As shown in Table 1, the organopolysiloxanes of this invention have excellent heat resistance and resist discoloration even after heating. Moreover, they are able to impart an excellent softness to textile fiber surfaces following treatment.

### INDUSTRIAL APPLICABILITY

The organopolysiloxanes of the invention have excellent heat resistance and resist discoloration even after heating. Moreover, they are able to impart an excellent softness to textile fiber surfaces following treatment.

## Claims

1. An organopolysiloxane having, on a molecular terminal and/or a side chain, a group of general formula (1) below 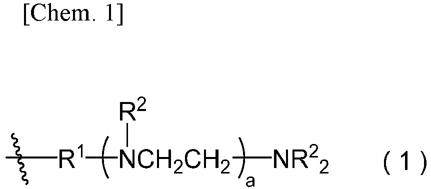 (wherein R¹ is a divalent hydrocarbon group of 1 to 8 carbon atoms, the subscript 'a' is an integer from 0 to 4, each R² is independently a hydrogen atom or a monovalent organic group of 7 to 20 carbon atoms containing at least one aromatic group, at least 30 mol% of the R² groups bonded to nitrogen atoms on the organopolysiloxane being monovalent organic groups of 7 to 20 carbon atoms containing at least one aromatic group, and the wavy line represents a bonding site).

2. The organopolysiloxane of claim 1, wherein the monovalent organic groups R² of 7 to 20 carbon atoms containing at least one aromatic group in formula (1) are groups of general formula (2) or (3) below 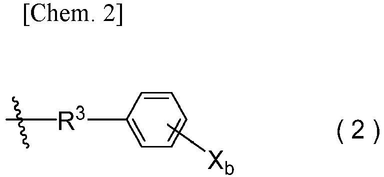 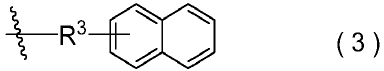 (wherein R³ is a divalent organic group of 1 to 10 carbon atoms, each X is independently a monovalent hydrocarbon group of 1 to 8 carbon atoms, a hydroxyl group or a halogen atom, the subscript 'b' is an integer from 0 to 5, and the wavy line represents a bonding site).

3. The organopolysiloxane of claim 1, wherein the monovalent organic groups R² of 7 to 20 carbon atoms containing at least one aromatic group in formula (1) are of one or more types selected from groups of the following general formulas 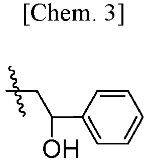 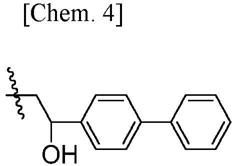 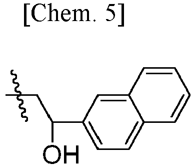 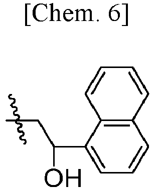 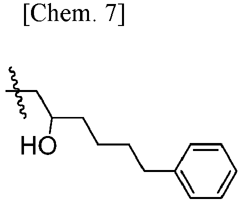 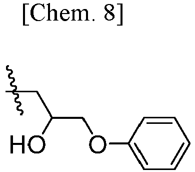 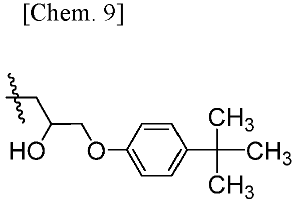 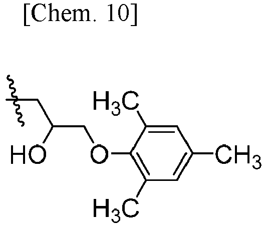 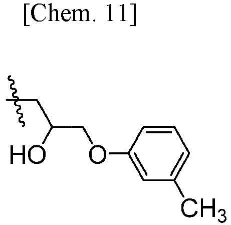 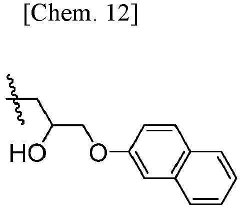 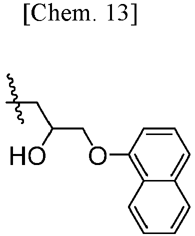 (wherein the wavy line represents a bonding site).

4. The organopolysiloxane of any one of claims 1 to 3, wherein at least 40 mol% of the R² groups bonded to nitrogen atoms on the organopolysiloxane are monovalent organic groups of 7 to 20 carbon atoms containing at least one aromatic group.

5. The organopolysiloxane of any one of claims 1 to 4, wherein the molecule is free of polyoxyalkylene groups.

6. A textile treatment comprising the organopolysiloxane of any one of claims 1 to 5.
